# EUROPÄISCHE PATENTSCHRIFT

(11) **EP 2 507 474 B1**
(45) Veröffentlichungstag und Bekanntmachung des Hinweises auf die Patenterteilung: **27.09.2017**
(21) Anmeldenummer: 11701823.4
(22) Anmeldetag: 31.01.2011
(51) Int. Cl.: E21B 43/24, E21B 43/30

(54) **VORRICHTUNG UND VERFAHREN ZUR GEWINNUNG, INSBESONDERE IN-SITU-GEWINNUNG, EINER KOHLENSTOFFHALTIGEN SUBSTANZ AUS EINER UNTERIRDISCHEN LAGERSTÄTTE**
DEVICE AND METHOD FOR OBTAINING, ESPECIALLY IN SITU, A CARBONACEOUS SUBSTANCE FROM AN UNDERGROUND DEPOSIT
DISPOSITIF ET PROCÉDÉ D'EXTRACTION, NOTAMMENT D'EXTRACTION IN-SITU, D'UNE SUBSTANCE CARBONÉE SITUÉE DANS UN GISEMENT SOUTERRAIN

(30) Priorität: 22.02.2010 DE 102010008779
(43) Veröffentlichungstag der Anmeldung: 10.10.2012
(73) Patentinhaber: Siemens Aktiengesellschaft, 80333 München (DE)
(72) Erfinder: HUBER, Norbert, 91052 Erlangen (DE); DIEHL, Dirk, 91052 Erlangen (DE); KOCH, Andreas, 91077 Neunkirchen am Brand (DE); KOOLMAN, Michael, 91088 Bubenreuth (DE); TORLAK, Muris, 90471 Nürnberg (DE); WACKER, Bernd, 91074 Herzogenaurach (DE)
(86) Internationale Anmeldenummer: PCT/EP2011/051279
(87) Internationale Veröffentlichungsnummer: WO 2011/101227

(56) Entgegenhaltungen:
- CA-A1- 2 304 938
- DE-A1-102007 008 292
- DE-A1-102007 036 832
- DE-B3-102007 040 605
- US-A- 4 010 799
- US-A- 4 037 655
- US-A- 4 084 637
- US-A- 4 362 610
- US-A1- 2003 141 053
- US-A1- 2006 151 166

## Beschreibung

Vorrichtung und Verfahren zur Gewinnung, insbesondere In-Situ-Gewinnung, einer kohlenstoffhaltigen Substanz aus einer unterirdischen Lagerstätte

Die Erfindung betrifft eine Anlage zur In-Situ-Gewinnung einer kohlenstoffhaltigen Substanz aus einer unterirdischen Lagerstätte unter Herabsetzung von deren Viskosität. Eine solche Vorrichtung dient insbesondere zur Förderung von Bitumen oder Schwerstöl aus einem Reservoir unter einem Deckgebirge, wie es bei Ölschiefer und/oder Ölsandvorkommen beispielsweise in Kanada gegeben ist.

Zur Förderung von Schwerstölen oder Bitumen aus den bekannten Ölsand- oder Ölschiefervorkommen muss deren Fließfähigkeit erheblich erhöht werden. Dies kann durch Temperaturerhöhung des Vorkommens (Reservoirs) erreicht werden. Die Erhöhung der Fließfähigkeit kann zum einen durch Einbringen von Lösungs- bzw. Verdünnungsmitteln und/oder zum anderen durch Aufheizen bzw. Aufschmelzen des Schwerstöl oder Bitumens erfolgen, wozu mittels Rohrsystemen, welche durch Bohrungen eingebracht werden, eine Beheizung erfolgt.

Das am weitesten verbreitete und angewendete In-Situ-Verfahren zur Förderung von Bitumen oder Schwerstöl ist das SAGD(Steam Assisted Gravity Drainage)-Verfahren. Dabei wird Wasserdampf, dem Lösungsmittel zugesetzt sein können, unter hohem Druck durch ein innerhalb des Flözes horizontal verlaufendes Rohr eingepresst. Das aufgeheizte, geschmolzene und vom Sand oder Gestein abgelöste Bitumen oder Schwerstöl sickert zu einem zweiten etwa 5 m tiefer gelegenem Rohr, durch das die Förderung des verflüssigten Bitumens oder Schwerstöl erfolgt, wobei der Abstand von Injektor und Produktionsrohr abhängig von Reservoirgeometrie ist.

Der Wasserdampf hat dabei mehrere Aufgaben gleichzeitig zu erfüllen, nämlich die Einbringung der Heizenergie zur Verflüssigung, das Ablösen vom Sand sowie den Druckaufbau im Reservoir, um einerseits das Reservoir geomechanisch für Bitumentransport durchlässig zu machen (Permeabilität) und andererseits die Förderung des Bitumens ohne zusätzliche Pumpen zu ermöglichen.

Das SAGD-Verfahren startet, indem für beispielsweise drei Monate durch beide Rohre Dampf eingebracht wird, um zunächst möglichst schnell das Bitumen im Raum zwischen den Rohren zu verflüssigen. Danach erfolgt die Dampfeinbringung nur noch durch das obere Rohr und die Förderung durch das untere Rohr kann beginnen.

Die Dampferzeugung erfolgt üblicherweise an der Tagesoberfläche. Aus der Schrift zur Patentanmeldung CA 2304938 A1 ist weiterhin bekannt, dass die Dampferzeugung im Untergrund - also in-situ - für ein vorerst als Flüssigkeit eingeleitetes Lösungsmittel erfolgen kann. Für diese Verdampfung können elektromagnetische Induktionsheizspulen vorgesehen sein.

In der deutschen Patentanmeldung DE 10 2007 008 292 A1 wird bereits angegeben, dass das dazu üblicherweise verwendete SAGD-Verfahren mit einer induktiven Heizvorrichtung komplettiert werden kann. Des Weiteren wird in der deutschen Patentanmeldung DE 10 2007 036 832 A1 eine Vorrichtung beschrieben, bei der parallel verlaufende Induktoren- bzw. Elektroden-Anordnungen vorhanden sind, die oberirdisch an einen Oszillator bzw. Umrichter angeschlossen sind.

Bei den älteren, deutschen Patentanmeldungen DE 10 2007 008 292 A1 und DE 10 2007 036 832 A1 wird also vorgeschlagen, den Dampfeintrag mit einer induktiven Beheizung der Lagerstätte zu überlagern. Dabei kann gegebenenfalls weiter zusätzlich auch noch eine resistive Beheizung zwischen zwei Elektroden erfolgen.

Bei den vorbeschriebenen Einrichtungen muss immer die elektrische Energie über einen elektrischen Hinleiter und einen elektrischen Rückleiter geführt werden. Dazu ist ein nicht unerheblicher Aufwand notwendig.

Bei den genannten älteren Patentanmeldungen werden einzelne Induktorpaare aus Hin- und Rückleiter oder Gruppen von Induktorpaaren in verschiedenen geometrischen Konfigurationen bestromt, um das Reservoir induktiv zu erhitzen. Dabei wird innerhalb des Reservoirs von einem konstanten Abstand der Induktoren ausgegangen, was bei homogener elektrischer Leitfähigkeitsverteilung zu einer konstanten Heizleistung entlang der Induktoren führt. Beschrieben sind die räumlich eng beieinander geführten Hin- und Rückleiter in den Abschnitten, in denen das Deckgebirge durchstoßen wird, um dort die Verluste zu minimieren.

Eine Variation der Heizleistung entlang der Induktoren kann, wie in den älteren Anmeldungen beschrieben, speziell durch abschnittsweise Injektion von Elektrolyten erfolgen, womit die Impedanz verändert wird. Dies setzt entsprechend Elektrolytinjektionsvorrichtungen voraus, deren Installation aufwendig oder kostspielig sein kann.

Davon ausgehend ist es Aufgabe der Erfindung, die vorbeschriebene Einrichtung für eine induktive Beheizung weiter zu optimierten.

Die Aufgabe wird erfindungsgemäß durch die Merkmale der unabhängigen Patentansprüche gelöst. Vorteilhafte Weiterbildungen und Ausgestaltungen der Erfindung sind in den Unteransprüchen angegeben.

Erfindungsgemäß ist eine Vorrichtung zur Förderung von einer kohlenwasserstoffhaltigen Substanz, insbesondere Bitumen oder Schwerstöl, aus einem Reservoir vorgesehen, wobei das Reservoir mit Wärmeenergie zur Verringerung der Viskosität der Substanz beaufschlagbar ist, wozu wenigstens eine Leiterschleife zur induktiven Bestromung des Reservoirs als elektrische/elektromagnetische Heizung des Reservoirs vorgesehen ist, wobei ein Leiter - ein Induktor - der Leiterschleife in zumindest einem Abschnitt von einer Flüssigkeitsführung umgeben ist und die Flüssigkeitsführung perforiert ist, so dass bei Zuführung einer Flüssigkeit die Flüssigkeit über eine Perforation aus der Flüssigkeitsführung in das Reservoir eindringt.

Erfindungsgemäß handelt es sich also um eine "in-situ"-Förderung, also die Förderung der kohlenwasserstoffhaltigen Substanz direkt aus dem Reservoir, in dem diese Substanz angereichert ist, ohne das Reservoir im Tagebau abzubauen. Als Reservoir versteht man vorzugsweise eine Ölsand-Lagerstätte, die unterirdisch zu finden ist.

Erfindungsgemäß ist keine Einbringung von Dampf über die Flüssigkeitsführung vorgesehen. Jedoch kann eine Kombination zusätzlich mit dem SAGD-Verfahren vorteilhaft sein, beispielsweise das Kühlen des Induktors gemäß der erfindungsgemäßen Vorrichtung und ein Einbringen von Dampf über ein weiteres Rohr oder einen weiteren Schlauch.

Unter Abschnitt des Leiters ist ein Teilstück des Leiters zu verstehen. Wird angenommen, dass es sich um den Leiter im wesentlichen um ein verdrilltes Kabel handelt, dass von einer röhrenförmigen Hülle ummantelt ist, so ist als Abschnitt des Leiters ein Teilstück entlang der Erstreckung des Kabels und der Hülle zu verstehen.

Als Leiter wird insbesondere ein serieller Resonanzkreis oder ein Teil davon verstanden, welcher in einem kabelartigen Aufbau mit äußerer Isolierung gebracht wird. Dies ist erfindungsgemäß von einer Flüssigkeitsführung umgeben.

Die Flüssigkeitsführung ist ein ausgedehnter hohler Körper - beispielsweise ein Rohr oder ein Schlauch - zu verstehen, durch den Flüssigkeit transportiert werden kann.

Durch das Vorsehen einer Flüssigkeitsführung kann eine Flüssigkeit entlang des Leiters und in das Reservoir geleitet werden. Je nach Ausgestaltung der Flüssigkeitsführung können sich dadurch folgende Vorteile ergeben:
i) Erhöhung der elektrischen Leitfähigkeit im Reservoir mittels Einleiten von Flüssigkeit in das Reservoir.
   Ein Problem beim elektromagnetischen Heizen mittels Induktion mancher Lagerstätten ist nämlich, dass die elektrische Leitfähigkeit in der Lagerstätte verhältnismäßig niedrig sein kann, und damit die resultierende, in die Lagerstätte eingebrachte, thermische Leistung möglicherweise nicht ausreichend ist, oder sogar hohe Energieverluste in der unmittelbarer Umgebung der Lagerstätte aufgrund der großen Eindringtiefen der magnetischen Felder entstehen. Somit kann erfindungsgemäß auf eine Erhöhung der elektrischen Eingangsleistung verzichtet werden, wodurch die Rentabilität und die Umweltfreundlichkeit des Prozesses maßgeblich beeinträchtigt würde.
ii) Erhöhte Verdrängung der kohlenwasserstoffhaltigen Substanz, z.B. des Öls, durch das Einleiten von Flüssigkeit in das Reservoir.
   Ein weiteres Problem beim elektromagnetischen induktiven Heizen ist nämlich die mangelnde oder unzureichende Verdrängung des Öls aus der Lagerstätte während der Förderung, was die Förderrate beeinträchtigen oder sogar die Förderung zum Stillstand bringen kann. Die Ölverdrängung beim SAGD-Verfahren nach dem Stand der Technik erfolgt durch die Ausdehnung der Wasserdampfkammer in der Lagerstätte. Beim erfindungsgemäß vorgesehenen elektromagnetischen induktiven Heizen ohne zusätzliche Dampfeinbringung gibt es nicht zwangsläufig eine Wasserdampfkammer, so dass eine Ölverdrängung aufgrund einer Wasserdampfkammer nicht erfolgen kann. Dies wäre nur bei Einbringung sehr großer elektrischer Leistung über die Induktoren möglich, was aber vorzugsweise vermieden werden soll.
iii) Kühlung des Leiters, indem die Flüssigkeit direkt oder in der Nähe des Leiters entlanggeleitet wird, um einem Aufwärmen des Leiters durch die erhitzte Umgebung des Leiter entgegenzuwirken oder auch zur Aufnahme bereits im Leiter angefallene Erwärmung. Darüber hinaus kann es vorteilhaft sein dass auch die Umgebung des Leiters gekühlt werden kann, damit kein siedenes Wasser im Reservoir in direkte Berührung mit dem Leiter oder dessen Ummantelung kommt, wobei jedoch anzumerken ist, dass prinzipiell ein Sieden von Wasser im Reservoir vorteilhaft ist, um beispielsweise eine Verdrängung von Öl zu erreichen.

Durch das Kühlen des Leiters kann die elektrische Leitfähigkeit in der unmittelbaren Umgebung um den Leiter reduziert werden und somit die geometriebedingt hohe Heizleistungsdichte direkt am Leiter zu reduzieren. Man kann somit eine homogenere Heizleistungsdichte im Reservoir erreichen.

Die Kühlung ist insbesondere bei größeren Lagerstättetiefen - etwa größer als 130 m - vorteilhaft, weil es ansonsten zur Überhitzung des Induktors, beispielsweise bei Temperaturen von ca. 200°C oder mehr, kommen könnte. Insbesondere eine Kunststoffisolation des Induktors könnte einer solchen hohen Temperatur dauerhaft nicht standhalten. Zu beachten ist hierbei, dass die Siedetemperatur von Wasser im Reservoir bei einer Tiefe von 130 m oder darüber hinaus bei ca. 200°C liegen kann.

Die Wärme des Leiters umfasst einerseits Wärme aufgrund ohmscher Verluste im Leiter, jedoch wesentlicher kann die Wärme aus dem Reservoir sein, die der Leiter ohne entsprechende Kühlung aus der Umgebung aus dem Reservoir aufnehmen würde.

Insbesondere über den Kontakt der Flüssigkeit mit einer Rohrwandung, welche wiederum mit dem Reservoir in Kontakt steht, wird vorteilhafterweise die Rohrwandungswärme abgeführt.

Weitere joulsche Verluste im Leiter können über die äußere, mit der Flüssigkeit in Kontakt stehende Isolierung des Leiters an die Flüssigkeit abgeführt werden, wobei die Flüssigkeit in einem äußeren Rohr geführt wird.

Im Folgenden werden zuerst die Merkmale für eine Kühlung der des Leiters erläutert. Hierbei basiert der erfinderische Gedanke im wesentlichen auf eine Flüssigkeitsführung mit geschlossenem Flüssigkeitskreislauf, bei dem kühle Flüssigkeit entlang des Leiters innerhalb der Flüssigkeitsführung fließt, im Reservoir aufgeheizt wird und wieder aus dem Reservoir hinausgeleitet wird. Darauf aufbauend wird dann der zusätzliche erfinderische Gedanke erläutert, bei dem zusätzlich oder alternativ zur Kühlung, die Flüssigkeit über die Flüssigkeitsführung ins Reservoir eingespeist wird und dort im Erdreich verteilt wird, um weitere Effekte - beispielsweise die Verbesserung der Leitfähigkeit im Reservoir - zu erzielen.

### 1) Kühlung des Leiters:

In einer bevorzugten Ausgestaltung können die Flüssigkeitsführung und der Leiter derart zueinander angeordnet sein, dass eine Flüssigkeit in der Flüssigkeitsführung eine Kühlung des Leiters bewirkt. Dabei ist es irrelevant, ob es sich um eigene Abwärme des Leiters handelt oder ob es Wärme ist, die von Außen, vom durch den stromführenden Leiter erhitzten Reservoir, auf den Leiter wirkt. Der kühlende Effekt kann durch Bewegung der Flüssigkeit, insbesondere entlang des Leiters und unter Umwälzung oder Austausch der Flüssigkeit, verstärkt werden, da dadurch warme Flüssigkeit weggeleitet wird und kühle Flüssigkeit nachfließen kann.

Vollständigkeitshalber sei erwähnt, dass in einer weiteren vorteilhaften Ausgestaltung die Flüssigkeitsführung Teil eines im wesentlichen geschlossenen Flüssigkeitskreislaufs sein kann, bei dem ein Mittel zum Wärmetauschen - insbesondere an der Oberfläche und nicht innerhalb des Reservoirs - vorgesehen ist, um eine innerhalb der Flüssigkeitsführung erhitzte Flüssigkeit wieder abzukühlen.

Mittels einer weiteren vorteilhaften Ausgestaltung kann die Rückkühlung der Flüssigkeit durch Rohre erfolgen, die durch kältere Bereich des Reservoirs führen, d.h. die Flüssigkeit wird nicht an die Oberfläche gebracht, sondern zirkuliert nur in der Tiefe. In diesem Fall ist vorzugsweise eine Pumpe in der Tiefe zu installieren. Vorteilhaft ist dabei, dass die elektrisch eingebrachte Heizleistung dem Reservoir nicht entzogen wird, sondern nur anders verteilt wird.

Vorteilhafterweise kann die Flüssigkeitsführung als Schlauch und/oder Rohr ausgebildet sein, wobei der Leiter innerhalb des Schlauchs bzw. des Rohrs angeordnet ist, insbesondere so dass bei Zuführung einer Flüssigkeit der Leiter von der Flüssigkeit umspült wird. Somit kann eine optimale Übertragung von Wärme vom Leiter auf die Flüssigkeit gewährleistet werden.

Insbesondere kann der Schlauch und/oder das Rohr in etwa koaxial - zentriert - zum Leiter angeordnet sein, wobei insbesondere zumindest ein Steg innerhalb des Schlauchs bzw. des Rohrs zum Fixieren oder Positionieren des Leiters bzw. zum Stabilisieren der Lage des Leiters innerhalb des Schlauchs bzw. des Rohrs vorgesehen ist. Entlang einer axialen Richtung des Schlauchs/Rohrs können wiederholt Stege vorgesehen sein, um die Lage des Leiters zu sichern. Alternativ kann ein Steg auch eine axiale Ausdehnung haben, die sich sogar in einer besonderen Ausgestaltung über die gesamte Länge des Schlauchs/Rohrs erstreckt.

Alternativ dazu kann der Leiter innerhalb des Schlauchs bzw. des Rohrs auch frei beweglich angeordnet sein, d.h. der Leiter ist unzentriert im Schlauch bzw. im Rohr und auf Mittel zum Fixieren wird verzichtet.

In einer weiteren Ausgestaltung kann die Flüssigkeitsführung als eine Vielzahl von Schläuchen und/oder Rohren ausgebildet sein. Weiterhin können eine Vielzahl von Kapillaren und/oder ein poröses Material vorgesehen sein, um die Flüssigkeit in der Flüssigkeitsführung zu transportieren. Diese Varianten sind bevorzugt derart angeordnet, dass der Leiter von der Vielzahl von Schläuchen und/oder Rohren und/oder Kapillaren und/oder dem porösen Material umgeben ist, wobei vorzugsweise die Vielzahl von Schläuchen und/oder Rohren und/oder Kapillaren und/oder das poröse Material und der Leiter innerhalb einer gemeinsamen schlauchförmigen Außenhülle angeordnet sind. Diese genannten Mittel zur Führung der Flüssigkeit sind insbesondere alle parallel zueinander verlaufend oder verdrillt. Diese Ausgestaltungen können so verstanden werden, dass die Flüssigkeit nicht den Leiter direkt umfließt sondern Schläuche/Rohre werden von außen an den Leiter angebracht sind.

Vollständigkeitshalber sei erwähnt, dass auch ein umgekehrter Ansatz denkbar ist, dass sich ein Leiter aus einer Vielzahl an Teilleitern zusammensetzt und diese Teilleiter um die Flüssigkeitsführung herum angeordnet werden können.

In einer Erweiterung der bisherigen Ausgestaltungen kann die Flüssigkeitsführung in Form der Vielzahl von Schläuchen und/oder Rohren derart ausgebildet sein, so dass mindestens ein erster Schlauch und/oder Rohr vorgesehen ist, in dem die Flüssigkeit gegenläufig zu einer Flussrichtung der Flüssigkeit in einem mindestens einen zweiter Schlauch und/oder Rohr fließt. Auf diese Weise kann zum Beispiel ein geschlossener Kreislauf gebildet werden. Alternativ könnten auch zwei Stellen oberirdisch Flüssigkeit in die Flüssigkeitsführung gepumpt werden, wobei von jeder der zwei Stellen nur eine Untermenge der zur Verfügung stehenden Schläuchen bzw. Rohren befüllt werden. Vorteilhafterweise wird mit einer gegenläufigen Kühlflüssigkeitsführung eine homogenere Temperatur entlang des Leiters erreicht.

In einer Erweiterung kann zwischen der Flüssigkeitsführung und dem Reservoir, insbesondere zwischen der Flüssigkeitsführung und der Außenhülle, thermisch isolierende Mittel angeordnet sein, wobei das thermisch isolierende Mittel insbesondere als ein luft- oder gasgefüllter oder als ein Vakuum-einschließender Hohlraum ausgebildet ist. Die thermische Isolation von der Flüssigkeitsführung gegen das Reservoir erweist sich dabei insbesondere als vorteilhaft, da dadurch bei geeigneter Ausgestaltung die induktiv eingebracht Heizleistung nur zu einem möglichst geringen Anteil durch die Flüssigkeitskühlung wieder abgeführt wird.

Weiterhin kann ein Druckerhöhungsmittel zum Erhöhen des Drucks einer Flüssigkeit oder zum Umlaufen der Flüssigkeit vorgesehen sein, insbesondere eine Pumpe, so dass mittels des Druckerhöhungsmittels eine Bewegung der Flüssigkeit in der Flüssigkeitsführung erreicht wird. Auf diese Weise kann ein Kühlkreislauf betrieben werden.

Alternativ zur aktiven Pumpe kann auch ein Naturumlauf, gegebenenfalls mit Siedevorgang - beispielsweise Thermosiphon - vorgesehen sein.

Weitere Elemente des Gesamtsystems, neben der Flüssigkeitsführung und der Pumpe können insbesondere ein Vorratsbehälter für die Flüssigkeit, ein Wärmetauscher und weitere oberirdische oder unterirdische hydraulische Verbindungen sein. Der Vorratsbehälter kann dabei entweder unter atmosphärischem Druck oder als Druckbehälter ausgeführt werden. Darüber hinaus kann ein Druckhalter vorgesehen sein, mittels dem die Flüssigkeit als Kühlmittel auf höherem Druckniveau gehalten wird und unter hohem Druckniveau zirkuliert, um Sieden bei hohem Leistungseintrag zu vermeiden. Vorzugsweise weist das Gesamtsystem eine Rückführung für die Flüssigkeit an die Oberfläche auf.

Die Erfindung ist insbesondere vorteilhaft, wenn die Flüssigkeitsführung eine Perforation aufweist, so dass bei Zuführung einer Flüssigkeit die Flüssigkeit aus der Flüssigkeitsführung in das Reservoir eindringen kann, und die Perforation wiederum Löcher aufweist, die in Form und/oder Größe und/oder Verteilung derart ausgestaltet sein können, dass bei Zuführung einer Flüssigkeit unter vorgegebenem Druck der Leiter über die gesamte Länge des von der Flüssigkeitsführung umgebenen Abschnitts der Leiterschleife ausreichend gekühlt wird.

Dies kann insbesondere dadurch erreicht werden, indem die Flüssigkeitsführung über die Länge durchgängig ausreichend mit Flüssigkeit gefüllt ist und/oder durch den Leiter erwärmte Flüssigkeit aus der Flüssigkeitsführung durch die Löcher weggeleitet wird. Alternativ oder zusätzlich kann eine erforderliche Menge kühlender Flüssigkeit mit niedriger Temperatur durch die Flüssigkeitsführung nachfließen.

Der vorstehend genannte Effekt ergibt sich vorzugsweise, wenn der der über die Zuführung angewendete Druck auf die Flüssigkeit in der Flüssigkeitsführung derart an eine vorgegebene Perforation angepasst wird, dass ein Austreten der Flüssigkeit durch die Perforation über einen längeren Anwendungszeitraum gewährleistet ist.

Die bisher beschriebenen Anordnungen sind insbesondere vorteilhaft, als dass durch die Flüssigkeitsführung geleitete Flüssigkeit eine Umgebung im Reservoir thermisch isoliert wird und/oder dass der Leiter durch die durch die Flüssigkeitsführung geleitete Flüssigkeit gekühlt wird.

Als Flüssigkeit zur Kühlung kann Wasser vorgesehen sein, insbesondere entsalzt und/oder entkalkt und/oder mit einem als Frostschutz wirkendem Mittel versetzt - z.B. Glykol -. Weiterhin können Salzwasser, Öl, Emulsionen oder Lösungen vorgesehen sein.

Bevorzugt kann es sich bei der Grundform für die Flüssigkeit um eine extrahierte Flüssigkeit handeln, die sich aus dem gewünschten aus dem Reservoir geförderten Fördermaterial abscheiden lässt.

Bzgl. der Kühlung sei zusammengefasst, dass durch die erfindungsgemäße Anordnung eine auch in größeren Tiefen zu befürchtende Überhitzung des Induktors vermieden werden kann, bzw. die Lebensdauer gegenüber einem ungekühlten Induktor verlängert werden kann. Mit der Anordnung sind wirtschaftlichere, höhere Leistungsdichten zu erreichen.

Das Vorsehen einer Perforation um darüber eine Injektion der als Kühlmittel wirkenden Flüssigkeit in das Reservoir zu erreichen hat weiterhin einen Vorteil, dass die vom Leiter weggeführte Wärme im Reservoir verbleibt und diesem nicht entzogen wird, wie bei einem geschlossenen Kühlkreislauf mit Rückkühlung an der Oberfläche der Fall wäre. Im Folgenden wird nun weiter auf die Injektion von der Flüssigkeit in das Reservoir eingegangen.

### 2) Einspeisung von Flüssigkeit ins Reservoir:

Bis auf die Tatsache, dass es sich im Folgenden nicht um einen geschlossenen Flüssigkeitskreislauf handelt und dass Flüssigkeit im Reservoir zielgerichtet "verloren" geht, können die vorstehend genannten Merkmale auch im Fall der Einspeisung der der Flüssigkeit ins Reservoir auf identische oder analoge Weise implementiert werden. Die sich daraus ergebenden Vorteile - beispielsweise die verbesserte Kühlung - ergeben sich auch weiterhin entsprechend.

Gemäß der Erfindung ist die Flüssigkeitsführung perforiert, so dass bei Zuführung einer Flüssigkeit die Flüssigkeit aus der Flüssigkeitsführung durch die Perforation in das Reservoir eindringt bzw. eingeleitet wird. Unter Perforation sind beispielsweise Löcher oder Schlitze gemeint, die sich in einer Flüssigkeitsführung befinden, so dass Flüssigkeit aus dem Inneren der Flüssigkeitsführung nach Außen in die Umgebung der Löcher oder Schlitze austreten kann. Neben den genannten Löcher und Schlitzen ist es auch möglich, dass die Flüssigkeitsführung zumindest teilweise aus porösen Material oder Kapillaren besteht, so dass die Flüssigkeit durch diese Mittel an die Umgebung abgegeben werden kann.

Das Einleiten der Flüssigkeit in das Reservoir kann dabei die elektrische Leitfähigkeit des Reservoirs und/oder den Druck im Reservoir erhöhen eingeleitet wird.

Wie bereits erwähnt, kann ein Druckerhöhungsmittel zum Erhöhen des Drucks einer Flüssigkeit oder zum Umlaufen der Flüssigkeit vorgesehen sein, insbesondere eine Pumpe, so dass mittels des Druckerhöhungsmittels eine Flüssigkeit mit erhöhtem Druck in die Flüssigkeitsführung eingeleitet werden kann. Mit der Pumpe soll insbesondere so viel Druck erzeugt werden, dass eine vorbestimmte Menge an Flüssigkeit über die Perforation in das Reservoir eindringt. Mit "erhöhtem Druck" ist somit gemeint, dass ein Umgebungsdruck im Reservoir überwunden werden soll. Der hydrostatische Druck im Reservoir in der Umgebung der Perforation sollte überschritten werden, damit die Flüssigkeit austreten kann, was beispielsweise mit einem Druck von 10000 hPa (10 bar) bis 50000 hPa (50 bar) erreicht werden kann.

Vorzugsweise kann die Perforation derart ausgebildet sein und/oder können Mittel vorgesehen sein, dass ein Eindringen von Festkörpern und/oder Sanden aus dem Reservoir im Wesentlichen verhindert wird. Derartige Mittel sind beispielsweise unter dem Begriff "Gravel Pack" bekannt.

Die Erfindung ist insbesondere vorteilhaft, wenn die Perforation Löcher aufweist, die in Form und/oder Größe und/oder Verteilung derart ausgestaltet sein können, dass bei Zuführung einer Flüssigkeit unter vorgegebenem Druck die Flüssigkeit verteilt über eine Länge der Flüssigkeitsführung durch die Perforation in eine Umgebung der Leiterschleife im Reservoir abgegeben wird, so dass die elektrische Leitfähigkeit des Reservoirs verändert und/oder der Druck im Reservoir erhöht wird. Insbesondere kann die Flüssigkeit so gesteuert werden, dass die elektrische Leitfähigkeit innerhalb des Reservoir in seiner Ersteckung überwiegend erhöht wird und/oder dass die elektrische Leitfähigkeit im Reservoir in unmittelbarer Umgebung des Leiter erniedrigt wird.

Vorzugsweise soll die Perforation derart ausgebildet sein, dass die gesamte Länge der Flüssigkeitsführung - abgesehen von der Zuführung von der Oberfläche zur Zielregion im Reservoir - in jedem Abschnitt die gleiche Menge an Flüssigkeit abgegeben.

Die Erhöhung des Drucks im Reservoir ist insbesondere vorteilhaft, als dass dadurch die kohlenwasserstoffhaltigen Substanz im Reservoir besser verdrängt wird und/oder ein Unterdruck im Reservoir - aufgrund der Förderung der Substanz - vermieden wird.

Die vorstehend genannten Effekte, Erhöhung der Leitfähigkeit und Erhöhung des Drucks, ergibt sich vorzugsweise, wenn der der über die Zuführung angewendete Druck auf die Flüssigkeit in der Flüssigkeitsführung derart an eine vorgegebene Perforation angepasst wird, dass ein Austreten der Flüssigkeit durch die Perforation über einen längeren Anwendungszeitraum gewährleistet ist.

Als zuzuleitende Flüssigkeit eignet sich insbesondere Wasser oder eine organische oder anorganische Lösung als Elektrolyt, insbesondere auch zur Erhöhung der Leitfähigkeit.

Die Flüssigkeit kann vorzugsweise mindestens eines der folgenden Bestandteile aufweisen: Salze, schwache Säuren, schwache Basen, CO₂, oder Lösungsmittel, die insbesondere Alkane, beispielsweise Methan, Propan, Butan enthalten.

Zur weiteren Erhöhung des Drucks im Reservoir kann ein Ventil eines Förderrohrs zum Wegführen der verflüssigten kohlenwasserstoffhaltigen Substanz aus dem Reservoir geschlossen werden und zu einem späteren Zeitpunkt, abhängig vom Erreichen einer vorgegebenen Zeitspanne oder vom Erreichen eines vorgegebenen Drucks innerhalb des Reservoirs geöffnet werden. Somit kann während der Zeitspanne der Druck erhöht werden, weil kein Material das Reservoir verlässt und zusätzlich Flüssigkeit eingeleitet wird.

Insbesondere bei Vorliegen einer Perforation in der Flüssigkeitsführung ist ein Schließen des Flüssigkeitskreislaufs nicht notwendig. Es können beispielsweise für die Leiterschleife zwei voneinander getrennte Flüssigkeitsführungen vorgesehen sein, jeweils für eine Hälfte der Leiterschleife, wobei die beiden Flüssigkeitsführungen im Reservoir enden, ohne dass die Flüssigkeit wieder an die Oberfläche zurückgepumpt würde.

Es wurde bereits erläutert, welche Zusammensetzung die Flüssigkeit haben kann, die in das Reservoir in flüssiger Form eingespeist wird. Hierbei ist es insbesondere vorteilhaft, wenn die Flüssigkeit zumindest teilweise oder auch vollständig aus dem geförderten Wasser-Öl/Bitumen-Gemisch extrahiert wird. Dazu sollte die gewünschte zu fördernde Substanz von dem geförderten Wasser-Öl/Bitumen-Gemisch abgetrennt werden und der wässrige Rest nachbearbeitet bzw. aufbereitet werden. Dies kann im Vergleich zur Injizierung von Wasserdampf jedoch auf deutlich einfachere Art erfolgen.

Für das geförderte Wasser-Öl/Bitumen-Gemisch kann zuerst eine Öl- und/oder Gas-Separierung von der Flüssigkeit erfolgen. Zurück bleibt eine Restflüssigkeit - auch Produced Water genannt -, die weiterhin Öl-Anteile, Schwebestoffe und Sande und eine Vielzahl von chemischen Elementen oder Verbindungen enthält. Auf eine Entfernen des verbliebenen Öl-Anteils oder auch von vielen chemischen Elementen kann nun jedoch verzichtet werden, da bei der Rückführung der Restflüssigkeit in das Reservoir lediglich Stoffe enthalten sind, die ohnehin vorher im Reservoir vorhanden waren und bei der Förderung ausgeschwemmt wurden. Ein weiterer Grund, warum eine weitere Aufarbeitung der Restflüssigkeit nicht nötig ist, ist die Tatsache, dass erfindungsgemäß die Restflüssigkeit in flüssiger Form ins Reservoir eingebracht wird und nicht in gasförmigem Zustand. Eine Gewinnung von Speisewasser für Dampferzeuger würde jedoch eine aufwändige Apparatur erfordern und einen großen Energieeinsatz erfordern.

Im Wesentlichen sollte zur Aufbereitung der Restflüssigkeit lediglich eine Sandtrennung erfolgen, da dies beim Wieder-Einleiten der Restflüssigkeit in das Reservoir zum Verstopfen und Versanden der Flüssigkeitsführung führen kann. Dies würde einem dauerhaften Betrieb entgegenstehen.

In einer vorteilhaften Ausgestaltung kann nach der Entsandung auch eine Entsalzung der Restflüssigkeit vorgesehen sein, damit sich im Reservoir durch kontinuierliches Einleiten der aufbereiteten Restflüssigkeit keine zu Hohe Salzkonzentration ergibt.

Durch das Einleiten der entsandeten und entsalzenen Restflüssigkeit kann die Viskosität innerhalb des Reservoirs verringert werden, d.h. die Fließeigenschaften von Bitumen kann verbessert werden. Darüber hinaus ergibt sich eine Erhöhung der Stabilität des Reservoirs.

Zusätzlich zu den genannten Komponenten kann noch ein Wärmetauscher vorgesehen sein, um die aufbereitete Restflüssigkeit auf eine höhere Temperatur zu bringen, um eine unerwünschte Abkühlung des Reservoirs mit der Folge eines Druckabfalls oder einer Viskositätserhöhung zu verhindern.

Die vorliegende Erfindung und deren Weiterbildungen werden nachfolgend im Rahmen eines Ausführungsbeispiels an Hand von Figuren näher erläutert.

Dabei zeigen in schematischer Darstellung
- Figur 1: eine Vorrichtung mit einer Kühlung eines Induktors;
- Figur 2: eine perspektivische Darstellung eines gekühlten Induktors;
- Figur 3, 4, 5, 6: Querschnitte von verschiedenen Induktoren mit Flüssigkeitsführung;
- Figur 7: einen perforierte Flüssigkeitsführung;
- Figur 8: eine Vorrichtung zum Injizieren einer Flüssigkeit ins Reservoir;
- Figur 9: eine Vorrichtung zum Aufbereiten und Injizieren einer geförderten Produktionsstroms.

Sich in den Figuren entsprechende Teile sind jeweils mit denselben Bezugszeichen versehen. Nicht näher ausgeführte Teile sind allgemein bekannter Stand der Technik.

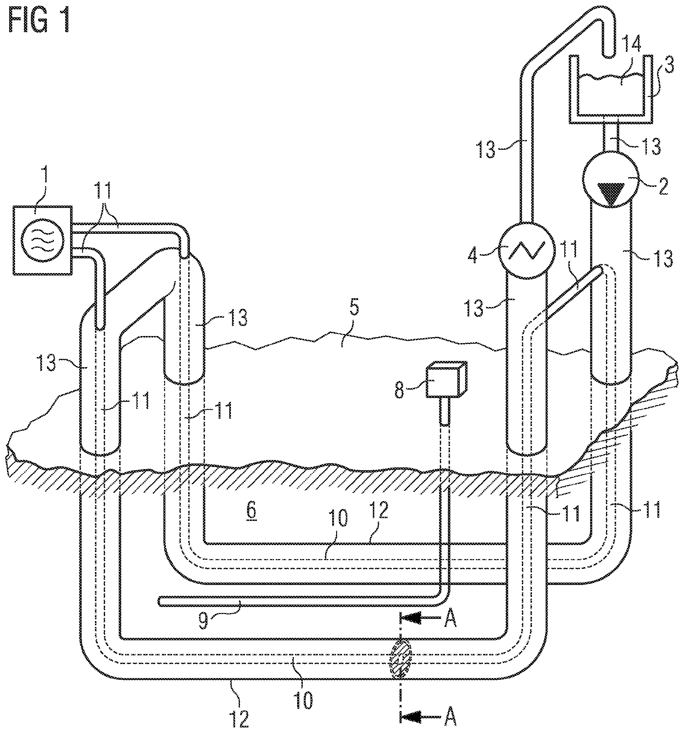

Figur 1 zeigt, schematisch dargestellt, eine Vorrichtung zur In-Situ-Gewinnung einer kohlenwasserstoffhaltigen Substanz aus einer unterirdischen Lagerstätte 6 als Reservoir unter Herabsetzung deren Viskosität, wobei eine Kühlung von Induktoren 10 vorgesehen ist. Bei einer solchen Vorrichtung kann es sich beispielsweise um eine Vorrichtung zur Gewinnung von Bitumen aus einem Ölsandvorkommen handeln. Bei der Lagerstätte 6 kann es sich insbesondere um ein Ölsandvorkommen oder ein Ölschiefer-vorkommen handeln, aus welchem Bitumen oder andere Schweröle gewonnen werden können.

Weiterhin ist ein Rohr 9 zur Dampfeinbringung dargestellt, das im Wesentlichen zwischen parallelen Abschnitten eines Induktors 10 innerhalb des Reservoirs 6 angeordnet ist und das über einen Dampfgenerator 8 gespeist wird. Mittels über die Länge des Rohrs verteilt angeordnete Düsen - nicht dargestellt - wird der Dampf in das Reservoir 6 gepresst.

Nicht dargestellt ist eine Produktionsrohrleitung, über die die aus der Lagerstätte 6 extrahierte Substanz gesammelt und aus der Lagerstätte 6 heraus bis an eine Erdoberfläche 5 gefördert wird.

Die Vorrichtung zur In-Situ-Gewinnung einer kohlenwasserstoffhaltigen Substanz weist weiterhin einen Induktor 10 auf, der in Bohrungen innerhalb der Lagerstätte 6 verläuft. Der Induktor 10 oder Abschnitte von diesem sind als der erfindungsgemäße Leiter anzusehen. Es wird eine geschlossene Leiterschleife gebildet, die aus den zwei horizontal in der Lagerstätte 6 verlaufenden Hin- und Rückleitern des Induktors 10 besteht, sowie aus Leiterstücken 11 die nicht oder wenig als Heizung wirken und oberirdisch verlaufen bzw. von der Erdoberfläche 5 hinein in die Lagerstätte 6 führen, um den Stromanschluss für den Induktor 10 zu gewährleisten. In der Figur sind beispielsweise beide Schleifenenden der Leiterschleife oberirdisch angeordnet. Auf der rechten Seite in der Figur wird die Schleife einfach durch geschlossen - siehe Leiterstück 11 in der Figur. Auf der linken Seite befindet sich eine Elektroversorgung 1 inklusive aller benötigten elektrischen Einrichtungen wie Umrichter und Generator, durch die der nötige Strom und die nötige Spannung an die Leiterschleife angelegt wird, damit die Induktoren 10 als Leiter für eine elektrische/elektromagnetische Heizung zur Wärmeerzeugung in der Lagestätte 6 dienen.

Die Induktoren 10 sind gegenüber zumindest Teilen der Lagerstätte 6 als induktive elektrische Heizung wirksam. Bedingt durch die Leitfähigkeit von zumindest Teilen der Lagerstätte 6, kann diese durch die weitgehend konzentrisch um die beiden möglichst parallel verlaufenden Abschnitte des Induktors 10 erwärmt werden.

Die Leiterschleife kann in Bereichen, in denen diese außerhalb der eigentlichen Lagerstätte 6 verlaufen - als die Leiterstücke 11 -, mittels geeigneter Führung in ihrer Heizleistung stark gemindert werden. Auf diese Weise kann die Heizleistung in definierten Bereichen der Lagerstätte 6 eingebracht werden. Bei dem Induktor 10 kann es sich insbesondere um stabförmige metallische Leiter oder um verdrillte metallische Kabel aus einem insbesondere gut leitfähigen Metall handeln, welche als Resonanzkreis ausgebildet werden.

Gemäß der Figur ist neben dem elektrischen Kreislauf auch ein Kühlkreislauf vorgesehen, um den Induktor 10 zu kühlen. Der Kühlkreislauf umfasst eine Flüssigkeitsführung 12 die gemäß der Figur die Leiterschleife entlang ihrer Länge fast vollständig ummantelt. Wesentlich ist lediglich eine Ummantelung des Induktors 10. Eine Ummantelung außerhalb der Lagerstätte 6 ist nicht notwendig, mag aber vorteilhaft sein, da dadurch das Verlegen der Flüssigkeitsführung 12 zusammen mit der Leiterschleife erfolgen kann und somit eine vereinfachte Installation erlaubt.

Gemäß der Figur sind die Abschnitte des Kühlkreislaufs, die nicht explizit zur Kühlung vorgesehen sind, als Flüssigkeitsein/ausleitungen 13 markiert. Gemäß der Figur ist auf der linken Seite der Flüssigkeitskreislauf lediglich auf einfach Weise zu einem Ring geschlossen, so dass die durch eine erste Flüssigkeitsführung 12 entlang eines ersten Abschnitts des Induktors 10 hindurchgeleitete Flüssigkeit durch eine zweite Flüssigkeitsführung 12 entlang eines zweiten Abschnitts des Induktors 10 zurückgeführt wird. Auf der rechten Seite der Figur finden sich oberirdisch die Komponenten zu Bereitstellung der Flüssigkeit. Diese sind ein Vorratsbehälter 3, in dem sich die Flüssigkeit 14 zur Kühlung befindet. Weiterhin ist eine Pumpe 2 vorgesehen, um die Flüssigkeit 14 in den Kühlkreislauf zu pumpen und um eine Fließgeschwindigkeit sicherzustellen. Weiterhin ist ein Rückkühler 4 vorgesehen, durch den die erhitzte Kühlflüssigkeit heruntergekühlt werden kann.

Viele Varianten bzgl. der Anordnung des Induktors und des Kühlkreislaufs sind denkbar. Beispielsweise könnte auch auf der linken Seite in der Figur ein weiterer Rückkühler vorhanden sein. Weiterhin könnten mehrere Kühlkreisläufe vorhanden sein. Hin- und Rückleitung der Flüssigkeit könnten entlang eines einzigen Abschnitts des Induktors 10 und nicht entlang der gesamten Schleife erfolgen.

Die Flüssigkeitsführung 12 ist in der Figur als koaxiale Ummantelung zum Induktor 10 ausgebildet, so dass der Induktor 10 - bzw. eine Ummantelung des Induktors 10 - im Betrieb von einer Kühlflüssigkeit möglichst vollständig umgeben ist.

Im Betrieb kann die Vorrichtung so betrieben werden, dass bei angelegtem Strom an den Induktor 10, durch den die Umgebung des Induktors 10 in der Lagerstätte 6 erhitzt wird stets eine Kühlflüssigkeit durch die Flüssigkeitsführung 12 entlang des Induktors 10 geleitet wird. Der Induktor 10 erhitzt den Boden in der Umgebung des Induktors 10, wodurch der erhitzte Boden selbst zum thermischen Strahler wird. Der Induktor 10 ist vor erhöhten Temperaturen zu schützen. Dies erfolgt durch die Kühlflüssigkeit in der Flüssigkeitsführung 12 in Form der beschriebenen Außenkühlung des Induktors 10, wodurch einerseits der Induktor 10 thermisch isoliert und andererseits die durch den Induktor 10 aufgenommene Temperatur wieder abführt wird, so dass sich der Induktor 10 nicht oder zumindest nur gering oder in geringerem Umfang erhitzt.

Zur Verbesserung dieses Effekts kann die Flüssigkeitsführung 12 zusätzlich von einem thermischen Isolator ummantelt sein.

Auf diese Weise kann insbesondere ein Sieden von Wasser direkt am Induktor 10 in der Lagerstätte 6 verhindert werden, was wiederum einen negativen Einfluss auf eine ungekühlte Schutz-Ummantelung des Induktors 10 hätte, da die Schutz-Ummantelung für eine elektrische Isolation des Induktors 10 vorgesehen ist und üblicherweise aus Kunststoff besteht, jedoch eine dauerhafte Temperaturerhöhung den Kunststoff angreifen könnte. Es sei jedoch noch einmal erwähnt, dass ein Sieden von Flüssigkeit im Reservoir an sich durchaus vorteilhaft ist.

Idealerweise ist der Induktor 10 in die Flüssigkeitsführung 12 integriert und kann als eine Einheit verlegt werden. Verschiedene Ausgestaltungen von derartigen kombinierten Leitern und Kühlungen werden im Folgenden erläutert.

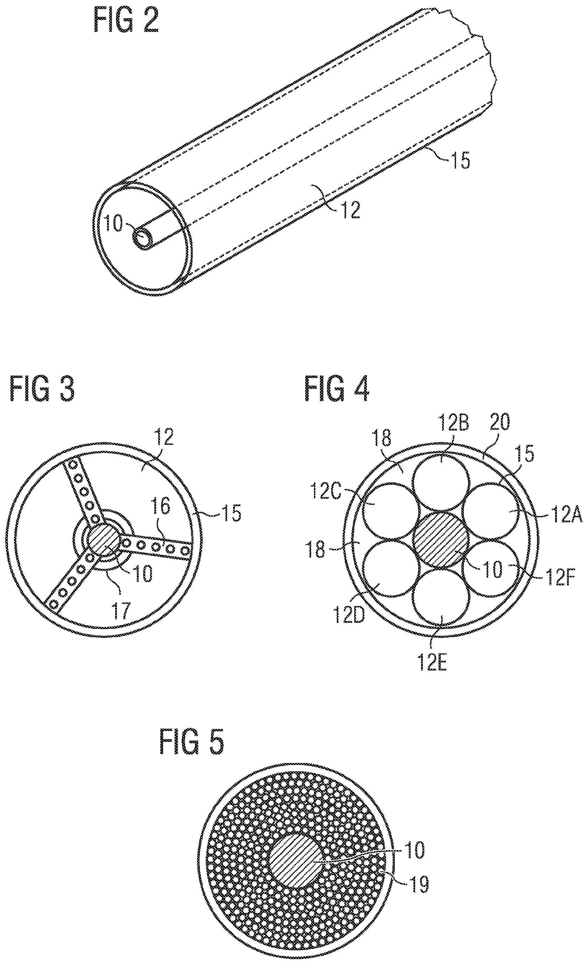

In Figur 2 ist ein Abschnitt eines Induktors 10 mit einer umgebenden Kühlung schematisch in einer perspektivischen Darstellung veranschaulicht. Ein in einer schlauchförmig ausgebildeten Ummantelung 15 der Flüssigkeitsführung 12 zentriert angeordneter Induktor 10 ist von einer Flüssigkeitsführung 12 umgeben. Die Positionierung des Induktors 10 kann beispielsweise allein durch die fließende Flüssigkeit in der Flüssigkeitsführung 12 bestimmt sein. Auf eine Zentrierung wird gemäß Figur 2 verzichtet. Der Induktor 10 ist demgemäß weitestgehend frei beweglich in der Flüssigkeitsführung 12 und könnte z.B. auch aufgrund der Gewichtskraft von innen auf der Flüssigkeitsummantelung zu liegen kommen. Für eine spezifische Positionierung oder Fixierung in der Flüssigkeitsführung 12 werden jedoch im Folgenden verschiedene Ausgestaltungen vorgestellt.

Der Durchmesser des Induktors 10 kann bevorzugt 30 bis 100 mm betragen. Die Ringspaltweite des Induktors 10 wird vorzugsweise 5 mm bis 50 mm betragen und der Massenstrom des Kühlmediums innerhalb der Flüssigkeitsführung 12 bevorzugt 5 bis 100 1/min.

Nachfolgend werden Querschnitte von gekühlten Leitern schematisch veranschaulicht. Der Querschnitt erfolgt entlang einer Schnittfläche, wie sie in Figur 1 durch A-A angedeutet ist.

Gemäß Figur 3 erfolgt eine Abstützung des Induktors 10 durch beispielsweise sternförmige Abstandhalter - Stege 16 -, wobei vorzugsweise 2 bis 5 Abstandhalter verwendet werden. Jedoch ist auch eine Lösung mit lediglich einem Steg 16 denkbar. Die Stege 16 sind vorzugsweise an der Innenwand der Ummantelung 15 angebracht und werden im Zentrum über Stabilisatoren 17 verbunden oder direkt an die Außenhülle des Induktors 10 angebracht. Der Induktor 10 befindet sich koaxial im Zentrum der Ummantelung 15 der Flüssigkeitsführung 12 und wird entweder als Einheit mit der Ummantelung 15 und den Stegen 16 verlegt oder wird nachträglich eingezogen.

Die Flüssigkeitsführung 12 ergibt sich aus den sich Hohlräumen innerhalb der Ummantelung 15.

Bei Ausführung der Stege 16 über die gesamte Länge werden gleichzeitig mehrer Kammern zwischen den Stegen 16 gebildet, die in unterschiedlichen Richtungen vom der Kühlflüssigkeit in unterschiedliche Richtungen durchflossen werden können.

Die Breite der Stege 16 kann z.B. im Bereich 5-30 mm liegen, damit die Druckverluste des Kühlmediums in der Flüssigkeitsführung 12 nicht zu groß werden.

Nach Figur 4 sind im Ringraum - also innerhalb einer Außenhülle 20 - um den Induktor 10 mehrere Schläuche bzw. Rohre 12A, 12B, ..., 12F als Flüssigkeitsführung 12 vorgesehen. Eine gegenläufige Führung des Kühlmediums in den Schläuchen/Rohren ist dabei denkbar. Zusätzlich kann als Teil der Außenhülle 20 oder als separate Elemente zusätzlich ein thermischer Isolator 18 zwischen den Schläuchen/Rohren und der Außenhülle 20 verwendet werden. In diesem Sinne ist auch zu verstehen, wenn diese Zwischenräume bleiben leer, d.h. Luft oder ein spezifisches Gas oder ein Vakuum als thermische Isolation dienen.

Vorzugsweise kann die Dicke einer thermischen Isolationsschicht zwischen 3 und 50 mm gewählt werden.

In Figur 5 wird das Kühlmedium über Kapillaren 19 als Flüssigkeitsführung 12 geleitet. Alternativ kann es sich auch um poröses Material handeln. Diese Varianten haben insbesondere den Vorteil, dass der Flüssigkeitsstrom innerhalb der Flüssigkeitsführung 12 besser gesteuert werden kann und dass die Position des Induktors 10 in Beziehung zur Flüssigkeitsführung 12 exakt vorgegeben werden kann. Dies kann vorteilhaft sein, da auch das induzierte Feld je nach Ausrichtung der zwei Induktoren 10 zueinander nicht an allen Seiten des Induktors 10 gleiche Stärke hat.

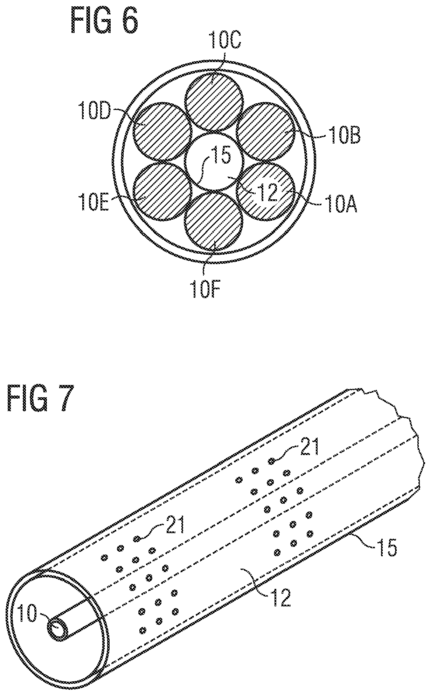

Vollständigkeitshalber ist gemäß Figur 6 eine weitere Variante der Flüssigkeitskühlung dargestellt, bei der ein zentraler, das Kühlmedium führender Schlauch bzw. Rohr als Flüssigkeitsführung 12 von den Teilleitern 10A, 10B, ..., 10F umgeben wird. Die Teilleiter 10A, 10B, ..., 10F stellen dabei zusammen gesehen den Induktor 10 dar. In dieser Form kann vorzugsweise der Schlauch- bzw. Rohrdurchmesser der Flüssigkeitsführung 12 zwischen 10 und 100 mm betragen und der Massenstrom des Kühlmediums kann zwischen 5 und 100 l/min betragen. Der Induktor 10 kann beispielsweise aus 10 bis 2000 Teilleitern bestehen, deren Gesamtquerschnittsfläche typischerweise von 10 bis 2000 mm² beträgt.

Während vorstehend eine reine Führung von Kühlflüssigkeit erläutert wurde, wird dies im Folgenden damit kombiniert, dass über die Länge der Flüssigkeitsführung 12 Flüssigkeit in die Lagerstätte 6 abgegeben werden kann.

In Figur 7 ist in schematischer Form ein Abschnitt eines Induktors 10 mit einer umgebenden Kühlung in einer perspektivischen Darstellung veranschaulicht, wobei eine Flüssigkeitsführung 12 perforiert ausgebildet ist, so dass Flüssigkeit austreten kann, wobei die Flüssigkeit tatsächlich in flüssiger Form austreten kann oder eventuell auch als Gas, also z.B. Wasserdampf.

Analog zu Figur 2 ist ein in einer schlauchförmig ausgebildeten Ummantelung 15 zentriert angeordneter Induktor 10 ist von einer Flüssigkeitsführung 12 umgeben. Im Unterschied zur Ausgestaltung in Figur 2 enthält die Flüssigkeitsführung 12 bzw. die Ummantelung 15 eine Perforation 12 bestehend aus eine Vielzahl von Löcher und Durchlässen, durch die die transportierte Flüssigkeit von innen nach außen dringen kann. Die Größe, Position und Häufigkeit der Löcher ist dabei an die gewünschten Bedingungen anzupassen und durch die Darstellung in Figur 7 nicht als einschränkend zu interpretieren, insbesondere so dass beispielsweise 30 bis 300 l/min über die gesamte Länge der Flüssigkeitsführung 12 austreten kann.

Die Löcher der Perforation 21 können dabei symmetrisch am gesamten Umfang der Ummantelung 15 angeordnet sein. Es könnte jedoch auch vorteilhaft sein, eine ungleichmäßige Verteilung vorzusehen. Auch über die Länge der Flüssigkeitsführung 12 können sich die Verteilung und/oder die Ausgestaltung der Löcher ändern, insbesondere da sich der Druck innerhalb der Flüssigkeitsführung 12 aufgrund der austretenden Flüssigkeit ändern kann.

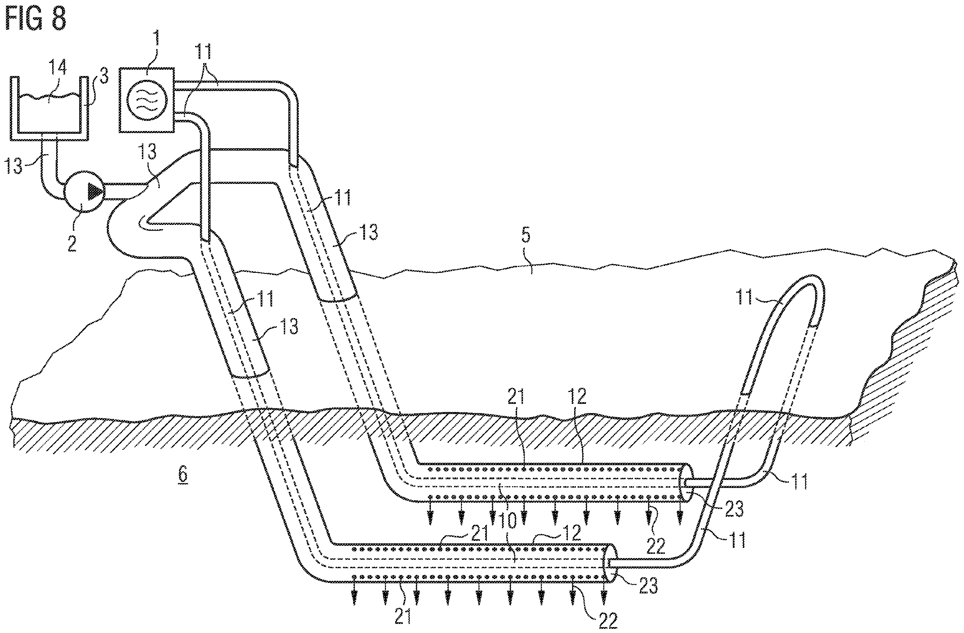

Eine austretende Flüssigkeit in die Lagerstätte 6 in der Umgebung des Induktors 10 hat dabei insofern einen Vorteil, als dass dadurch auf diese Weise ein Elektrolyt in das Reservoir injiziert werden kann, wodurch sich einerseits die elektrische Leitfähigkeit in der Lagerstätte 6 erhöhen kann und andererseits sich ein erhöhter Druck innerhalb der Lagerstätte 6 ergibt. Beide Effekte ergeben, dass die Förderquote und/oder die Fördergeschwindigkeit der zu fördernden kohlenwasserstoffhaltigen Substanz erhöht werden kann. Weitere Erläuterungen hierzu erfolgen an Hand von Figur 8.

Der Aufbau von Figur 8 entspricht grundlegend dem Aufbau von Figur 1. Es liegt eine Leiterschleife vor, die durch eine Elektroversorgung 1 betrieben wird. Abschnitte die als Elektrode wirken sind als Induktor 10 hervorgehoben. Dies sind die horizontal und parallel in der Lagerstätte 6 verlaufenden Abschnitte.

Es liegt weiterhin ein Vorratsbehälter 3 zum Bereitstellen einer Flüssigkeit 14, die als Kühlflüssigkeit vorgesehen ist. Diese Flüssigkeit 14 wird mittels der Pumpe 2 in ein Flüssigkeitssystem eingeleitet, dass aus den Flüssigkeitseinleitungen 13 und aus der Flüssigkeitsführung 12 besteht. Die Flüssigkeitsführung 12 soll hierbei wiederum die horizontal und parallel in der Lagerstätte 6 verlaufenden Abschnitte bezeichnen. Die Flüssigkeitseinleitungen 13 umfasst das Schlau/Rohrsystem oberhalb der Erdoberfläche 5 bzw. die Verbindung zur horizontal verlaufenden Flüssigkeitsführung 12.

Die Zuführung erfolgt im vorliegenden Beispiel im Unterschied zu Figur 1 von links auf der Zeichenebene, aber auch eine Zuführung von rechts, wie in Figur 1 wäre denkbar. Wesentlicher Unterschied zu Figur 1 ist jedoch, dass in dem horizontalen unterirdischen Abschnitt die Flüssigkeitsführung 12 eine Perforation 21 aufweist, durch die eine austretende Flüssigkeit 22 mittels Pfeile angedeutet ist. Weiterhin endet im vorliegenden Beispiel die Flüssigkeitsführung 12 bereits unterirdisch. Hierzu ist ein Abschluss 23 der Flüssigkeitsführung 12 vorgesehen, wobei dieser Abschluss ebenfalls eine Perforation aufweisen kann.

Im Gegensatz zur vorliegenden Ausgestaltung ist jedoch auch denkbar, dass die Flüssigkeitsführung 12 für einen verbleibenden Flüssigkeitsrest an die Oberfläche zurückgeführt wird. Alternativ kann zwar die Flüssigkeitsführung 12 an die Oberfläche zurückgeführt werden, jedoch ergibt sich aufgrund der Druckverhältnisse, dass keinerlei Flüssigkeit die Erdoberfläche 5 erreicht. Die Flüssigkeitsführung 12 wäre im letzten Abschnitt somit flüssigkeitslos.

Im Betrieb wird Flüssigkeit mittels einer Pumpe 2 oder einer ähnlich wirkenden Vorrichtung ins Kühlsystem eingeleitet. Der Druck bleibt bis zur Flüssigkeitsführung 12 im Wesentlichen unverändert bestehen, da bis zum Beginn der Flüssigkeitsführung 12 kein Flüssigkeitsauslass vorgesehen ist. Erreicht nun die zugeführte Flüssigkeit den Abschnitt mit der erfindungsgemäßen Flüssigkeitsführung 12, wird ein Teil der Flüssigkeit über die Perforation 21 in die Lagerstätte 6 eingeleitet. Ein weiterer Teil der Flüssigkeit fließt weiter entlang der Flüssigkeitsführung 12, wobei stets Flüssigkeit über die Perforation 21 abgegeben wird. Es ergibt sich somit ein Abfluss der Flüssigkeit durch die austretende Flüssigkeit 22. Der Verlust an Flüssigkeit wird über die Pumpe 2 durch nachfliessende Flüssigkeit ersetzt.

Es ergeben sich also mehrere Effekte: Einerseits fließt die Flüssigkeit entlang des Induktors 10 und kann Wärme abführen. Andererseits fließt Flüssigkeit in die Lagerstätte 6, im Umfeld der Induktoren 10, wodurch der Druck in der Lagerstätte 6 erhöht werden kann oder ein nachlassender Druck aufgrund der Förderung der kohlenwasserstoffhaltigen Substanz ausgeglichen werden kann, sowie die elektrische Leitfähigkeit in der Lagerstätte 6 insbesondere im Umfeld der Induktoren 10 erhöht werden kann, was wiederum die Effektivität der Induktoren 10 steigert. Die genannten Effekte beeinflussen sich gegenseitig, denn durch das Abfließen der erwärmten Flüssigkeit in die Umgebung des Induktors 10 fließt kühle Flüssigkeit entlang des Induktors 10 innerhalb der Flüssigkeitsführung 12 nach, wodurch der kühlende bzw. thermisch isolierende Effekt aufrechterhalten bleibt.

Der Abschluss 23, die Dimensionen der Flüssigkeitsführung 12, die Ausgestaltung der Perforation 21 und der auf die Flüssigkeit über die Pumpe 2 angewendete Druck sollte bevorzugt so aneinander angepasst werden - insbesondere auch unter Beachtung der vorliegenden Gesteinsformationen und der Tiefe der Lagerstätte -, dass im wesentlichen über die gesamte Länge des horizontal verlaufenden Induktors 10 die genannten Effekte auftreten und/oder gleichmäßig Flüssigkeit 22 in die Lagerstätte 6 austritt.

Der Druck ist von der Tiefe der Lagerstätte, d.h. von der Distanz der horizontal verlegten Induktoren 10 zur Erdoberfläche 5, abhängig. Der Druck sollte höher als der hydrostatische Druck der entsprechenden Wassersäule sein und liegt beispielsweise im Bereich zwischen 10000 hPa (10 bar) bis 50000 hPa (50 bar).

Druckentlastung in der Lagerstätte 6 wird vorgenommen, indem zu einem Zeitpunkt, bei dem der Druck auf ein oberhalb der Lagerstätte 6 vorliegendes Deckgebirge zu hoch wird, das/die Produktionsrohre - nicht dargestellt - geöffnet werden. Jedoch kann es vorteilhaft sein, die Produktionsrohre so lange wie möglich geschlossen zu halten um einen hohen Druck zu erreichen.

Die Funktion der austretenden Flüssigkeit 22 ist somit sowohl Erhöhung oder Beibehaltung des Drucks in der Lagerstätte 6, als auch Verdrängung - Ausschwemmung - der zu fördernden Substanz, wobei eine Vermeidung eines Unterdruckes in der Lagerstätte 6 erreicht wird.

Als Flüssigkeit kann insbesondere ein Elektrolyts, z. B. Wasser oder wässrige Lösungen, vorgesehen sein, beispielsweise versetzt mit weiteren Bestandteilen. Als Elektrolyt, Verdränger oder Lösungsmittel kommen insbesondere organische oder anorganische Flüssigkeiten oder im Aggregatzustand veränderte Gase in Frage bzw. Kombinationen daraus., insbesondere Wasser - vorzugsweise produziertes und von Schweröl abgeschiedenes Wasser -, Salzwasser, schwache Säuren, schwache Basen, andere Lösungsmittel wie Methan, Propan, Butan, CO2 oder Gemische.

Die in den Figuren 2 bis 5 vorgestellten Querschnitte sind auch für die Flüssigkeitsführung 12 mit austretender Flüssigkeit 22 anwendbar.

Entsprechend der Ausgestaltung von Figur 2 kann der Induktor 10 in einem perforierten Injektorrohr bzw. -schlauch liegen, bei dem auf eine Zentrierung des Induktors 10 wird verzichtet wird. Der Durchmesser des Induktors 10 wird bevorzugt 30 bis 100 mm betragen. Die Ringspaltweite wird bevorzugt 5 mm bis 50 mm betragen und der Massenstrom des Kühlmediums bevorzugt 30 bis 300 l/min.

Nach Figur 3 liegt der Induktor 10 liegt in einem perforierten Injektorrohr bzw. -schlauch, wobei eine Abstützung des Induktors 10 durch sternförmige Abstandhalter erfolgt. Der Durchmesser des Induktors 10 wird bevorzugt 30 bis 100 mm betragen. Die Ringspaltweite wird bevorzugt 5 mm bis 50 mm betragen und der Massenstrom des Kühlmediums bevorzugt 30 bis 300 l/min.

Gemäß Figur 4 werden an den Induktor 10 ein oder mehrere perforierte Injektorrohre bzw. -schläuche angebracht. Der direkte Kontakt des Induktors 10 zum Reservoir ist vorgesehen. Der fehlende Kontakt kann sogar vorteilhaft sein, da der Wärmeübergang vom umliegenden heißen Reservoir zurück auf den Induktor 10 verringert wird. Der Durchmesser des Induktors 10 wird bevorzugt 30 bis 100 mm betragen. Der Durchmesser der anliegenden Rohre bevorzugt 5 mm bis 50 mm betragen und der Massenstrom des Kühlmediums bevorzugt 30 bis 300 l/min.

Bei der gemäß Figur 8 diskutierten Ausgestaltung ist insbesondere vorteilhaft, dass sich wirtschaftlichere und höhere Leistungsdichten erreichen lassen. Gleichzeitig wird eine auch in größeren Tiefen zu befürchtende Überhitzung des Induktors 10 vermieden, sowie zusätzliche Verdrängung der zu fördernden Substanz aus der Lagerstätte erreicht. Weiterhin werden Lagerstätten mit geringer elektrischer Leitfähigkeit erst durch dieses Einspeisen von Flüssigkeit in die Lagerstätte induktiv beheizbar.

Im Unterschied zur Figur 8 kann in einer weiteren Aufbauvariante die Vorrichtung so ausgeführt werden, dass nur Teilbereiche des Induktors 10 in einem Injektorrohr bzw. -schlauch liegen. Weiterhin können die Austrittslöcher der Perforation 21 ungleichmäßig verteilt sein oder aber sogar Abschnitte vorhanden sein, in denen keine Perforation 21 vorhanden ist.

Bzgl. der vorgenannten Ausführungsformen sei noch einmal erwähnt, dass primär keine Zuführung von Dampf vorgesehen ist der oberirdisch erzeugt wird, sondern eine Zuführung von Flüssigkeiten. Auch auf eine zusätzliche Einspeisung von Dampf wird vorzugsweise verzichtet.

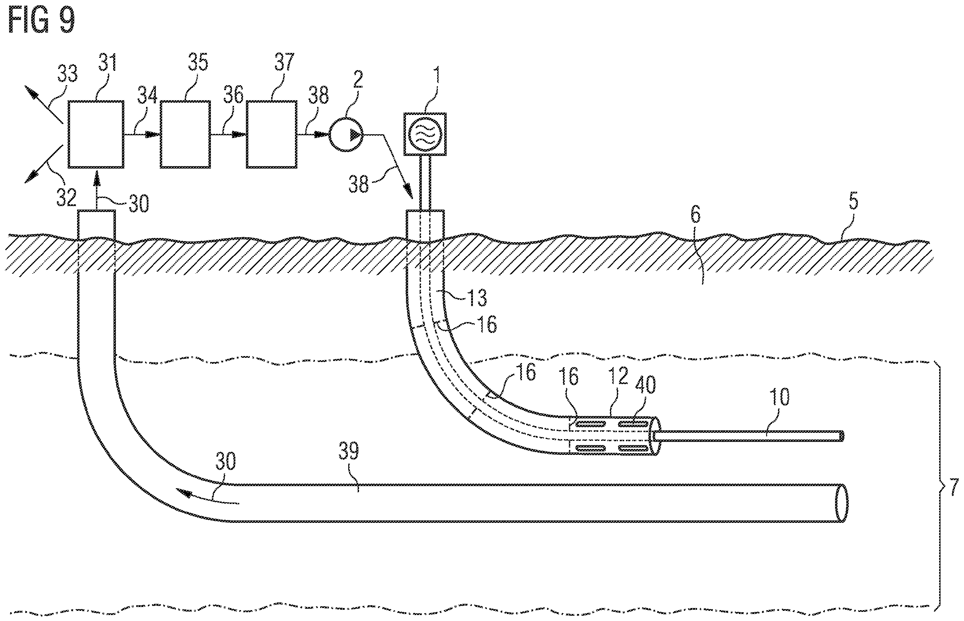

Bei den vorhergehenden Ausführungsformen wurde nicht weiter darauf eingegangen, woher die Flüssigkeit zum Einleiten in die Flüssigkeitsführung stammen könnte. Anhand Figur 9 wird nun weiter erläutert, dass diese Flüssigkeit vollständig oder teilweise aus dem Produktionsstrom extrahiert werden kann.

In Figur 9 ist eine Schnittdarstellung einer Lagerstätte 6 schematisch dargestellt, wobei die Lagerstätte 6 unterhalb der Erdoberfläche 5 angeordnet ist und einen Bereich 7 mit Ölvorkommen aufweist. Es ist wie in den bisherigen Ausführungsformen eine Leiterschleife vorgesehen, wobei in Figur 9 lediglich ein Induktor 10 der Leiterschleife dargestellt ist.

Weiterhin ist der Induktor 10 zumindest teilweise von einer Flüssigkeitsführung 12 ummantelt. Die Leiterschleife wird wie in den vorstehenden Ausführungsformen durch eine Elektroversorgung 1 betrieben.

In allen Ausgestaltungen der Erfindung - obwohl in den Figuren 1 und 8 nicht dargestellt - ist ein Produktionsrohr 39 zum Abtransportieren der zu fördernden Substanz im Erdreich vorhanden. Über das Produktionsrohr 39 kann ein Produktionsstrom 30 in Form eines Flüssigkeits-Feststoff-GasGemischs - d.h. ein Phasengemisch - an die Erdoberfläche 5 zur Aufbereitung transportiert werden.

Zuerst wird von dem Flüssigkeits-Feststoff-Gas-Gemisch mittels eines Öl/Gas-Separators 31 die zu fördernde Substanz abgeschieden. Ein sich dadurch ergebendes separiertes Öl 32 ist in der Figur als Pfeil angedeutet, ebenso ein sich alternativ oder zusätzlich ergebendes separiertes Gas 33. Weiterhin verbleibt eine Restflüssigkeit 34 - Produced Water - des separierten Produktionsstroms 30, die im Folgenden weiter aufbereitet wird, damit sie später wieder in die Lagerstätte 6 in flüssiger Form injiziert werden kann.

Als erster Aufbereitungsschritt wird die Restflüssigkeit 34 einer Entsandungseinrichtung 35 zugeführt, in der Sande und andere Festkörper abgeschieden werden. Nach diesem Aufbereitungsschritt verbleibt eine entsandete Restflüssigkeit 36.

Durch das Entsanden hat die verbliebene entsandete Restflüssigkeit 36 bereits eine Konsistenz, die für ein Rückinjizieren in flüssiger Form möglich ist. Dies ist dadurch gegeben, weil ein zum Rückinjizieren verwendetes Rohr durch die entsandete Restflüssigkeit 35 langfristig ohne Versandungen oder Verstopfungen betrieben werden kann.

Gemäß Figur 9 erfolgt ein weiterer Aufbereitungsschritt. Die entsandete Restflüssigkeit 36 wird einer Entsalzungseinrichtung 37 zugeführt, durch die der Salzgehalt der entsandete Restflüssigkeit 36 reduziert wird. Dies kann durch Zuführung von spezifischen Chemikalien erreicht werden. Idealerweise wird durch die Entsalzungseinrichtung 37 ein Salzgehalt in der sich ergebenden aufbereitete Flüssigkeit 38 erreicht, die einem natürlichen Salzgehalt innerhalb der Lagerstätte 6 entspricht.

Auf weitere Aufbereitungsschritte kann verzichtet werden, da es erfindungsgemäß vorgesehen ist, eine Flüssigkeit - also in flüssiger Form und nicht gasförmig - entlang des Induktors 10 über die Flüssigkeitsführung 12 in die Lagerstätte 6 einzubringen. Die Aufbereitung kann somit auf eine Entsandung und eine Entsalzung beschränkt werden.

Die derart aufbereitete Flüssigkeit 38 kann nun in den Kühlkreislauf gemäß Figur 1 oder der Flüssigkeitsinjektion gemäß Figur 8 zugeführt werden. Eine weitere alternative Variante wird im Folgenden an Hand Figur 9 erläutert.

Nach Figur 9 wird die aufbereitete Flüssigkeit 38 einer Pumpe 2 zugeführt und unter Druck in die Flüssigkeitseinleitung 13 eingepresst, die später in die Flüssigkeitsführung 12 übergeht. Der Induktor 10 wird erneut innerhalb der Flüssigkeitseinleitung 13 und der Flüssigkeitsführung 12 geführt. Die bereits erläuterten Ausgestaltungen des Induktors innerhalb einer Flüssigkeitsführung haben weiterhin Gültigkeit, insbesondere die Ausführungen gemäß der Figuren 2 bis 4. Beispielhaft ist in Figur 9 eine Ausgestaltung dargestellt, bei der der Induktor 10 über abschnittsweise vorhandene Stege 16 innerhalb der Flüssigkeitsführung bzw. - einleitung fixiert ist.

Die aufbereitete Flüssigkeit 38 wird folglich entlang des Induktors 10 innerhalb der Flüssigkeitseinleitung 13 und der Flüssigkeitsführung 12 innerhalb eines Schlauchs oder Rohrs in eine Tiefe der Lagerstätte 6 eingeleitet. Um nun ein injizieren der Flüssigkeit 38 über eine größere Länge in den Erdboden der Lagerstätte 6 zu ermöglichen, ist die Flüssigkeitsführung 12 geschlitzt ausgebildet, so dass die Flüssigkeit 38 über Schlitze 40 aus der Flüssigkeitsführung 12 in den Untergrund eindringt.

Die dort eindringende Flüssigkeit kann im weiteren Zeitverlauf aufgrund der heizenden Wirkung des Induktors 10 verdampfen.

Gemäß Figur 9 ist die Länge der Flüssigkeitsführung 12 beschränkt und endet, während der Induktor 10 weiter horizontal verläuft. Die Länge der geschlitzten Flüssigkeitsführung 12, die Häufigkeit und Größe der Schlitze 40 und die Menge der eingepresster Flüssigkeit 38 sollte dabei aufeinander abgestimmt werden.

In einer alternativen Ausgestaltung kann die Flüssigkeitsführung 12 wie in Figur 8 entlang der im wesentlichen gesamten aktiven Länge des Induktors 10 vorhanden sein, um eine großflächigere Verteilung der zu injizierenden Flüssigkeit zu gewährleisten.

Das unter Zuhilfenahme von Figur 9 erläuterte Vorgehen ist insofern vorteilhaft, als dass eine weniger aufwändige Wasseraufbereitung erforderlich ist als bei dem dampfbasierten Verfahren, da das Injektionswasser nicht oberirdisch verdampft werden muss.

Für die Injektion kann vorteilhafterweise auch über Durchlaufwärmetauscher - in Figur 9 nicht dargestellt - erwärmtes Wasser benutzt werden, um unerwünschte Abkühlung der Lagerstätte und damit Druckabfall oder Viskositätserhöhung in der Lagerstätte zu vermeiden.

Weiterhin ist vorteilhaft, dass die Einrichtung bezüglich Temperaturhaltung und damit auch Druckführung im Reservoir einfach zu regeln ist.

Als weitere Vorteile für die vorstehend erläuterten Kombination der mittelfrequent-induktiven Methode zur Erwärmung des Reservoirs mit dem vereinfachten Verfahren der Wasseraufbereitung und Wasser-Rückinjektion wird beispielsweise gesehen, dass lediglich ein reduzierter verfahrenstechnischer Aufwand für die Errichtung der Gesamtanlage der Wasseraufbereitung, besonders für die Speisewasseraufbereitung, erforderlich ist und dass Abfallwasser vermieden oder reduziert wird.

Im Vergleich zur Dampferzeugung, um Dampf ins Reservoir zu injizieren, ergibt sich eine deutliche Energieeinsparung durch Vermeidung der Wärmeverluste, die sich bei der Dampferzeugung ergeben.

## Patentansprüche

1. Vorrichtung zur Förderung von einer kohlenwasserstoffhaltigen Substanz, insbesondere Bitumen oder Schwerstöl, aus einem Reservoir (6), wobei das Reservoir (6) mit Wärmeenergie zur Verringerung der Viskosität der Substanz beaufschlagbar ist, wozu wenigstens eine Leiterschleife (10, 11) zur induktiven Bestromung des Reservoirs (6) als elektrische/elektromagnetische Heizung vorgesehen ist,
**dadurch gekennzeichnet,**
**dass** ein Leiter (10) der Leiterschleife (10, 11) in zumindest einem Abschnitt von einer Flüssigkeitsführung (12) zur Kühlung des Leiters (10) umgeben ist und
**dass** die Flüssigkeitsführung (12) perforiert ist, so dass bei Zuführung einer Flüssigkeit die Flüssigkeit über eine Perforation (21) aus der Flüssigkeitsführung (12) in das Reservoir (6) eindringt.

2. Vorrichtung nach Anspruch 1,
**dadurch gekennzeichnet,**
**dass** die Flüssigkeitsführung (12) als Schlauch und/oder Rohr ausgebildet ist, wobei der Leiter (10) innerhalb des Schlauchs bzw. des Rohrs angeordnet ist, insbesondere so dass bei Zuführung einer Flüssigkeit der Leiter (10) von der Flüssigkeit umspült wird.

3. Vorrichtung nach Anspruch 2,
**dadurch gekennzeichnet,**
**dass** der Schlauch und/oder das Rohr in etwa koaxial zum Leiter (10) angeordnet sind, wobei insbesondere zumindest ein Steg (16) innerhalb des Schlauchs bzw. des Rohrs zum Fixieren des Leiters (10) vorgesehen ist.

4. Vorrichtung nach Anspruch 2,
**dadurch gekennzeichnet,**
**dass** der Leiter (10) innerhalb des Schlauchs bzw. des Rohrs frei beweglich angeordnet ist.

5. Vorrichtung nach Anspruch 1,
**dadurch gekennzeichnet,**
**dass** die Flüssigkeitsführung (12) als eine Vielzahl von Schläuchen und/oder Rohren ausgebildet ist, wobei der Leiter (10) von der Vielzahl von Schläuchen und/oder Rohren umgeben ist, wobei vorzugsweise die Vielzahl von Schläuchen und/oder Rohren und der Leiter (10) innerhalb einer gemeinsamen schlauchförmigen Außenhülle (20) angeordnet sind.

6. Vorrichtung nach einem der vorhergehenden Ansprüche, **dadurch gekennzeichnet,**
**dass** ein Druckerhöhungsmittel (2) zum Erhöhen des Drucks einer Flüssigkeit und zum Umlaufen der Flüssigkeit vorgesehen ist, insbesondere eine Pumpe, so dass mittels des Druckerhöhungsmittels (2) eine Bewegung der Flüssigkeit erreicht wird und eine Flüssigkeit mit erhöhtem Druck in die Flüssigkeitsführung (12) eingeleitet wird.

7. Vorrichtung nach einem der vorhergehenden Ansprüche, **dadurch gekennzeichnet,**
**dass** die Perforation (21) derart ausgebildet ist und/oder dass Mittel vorgesehen sind, dass ein Eindringen von Festkörpern und/oder Sanden aus dem Reservoir (6) in die Flüssigkeitsführung (12) im Wesentlichen verhindert wird.

8. Vorrichtung nach einem der vorhergehenden Ansprüche, **dadurch gekennzeichnet,**
**dass** die Perforation (21) Löcher aufweist, die in Form und/oder Größe und/oder Verteilung derart ausgestaltet sind, dass bei Zuführung einer Flüssigkeit unter vorgegebenem Druck
a) der Leiter (10) über die gesamte Länge des von der Flüssigkeitsführung (12) umgebenen Abschnitts der Leiterschleife (10, 11) ausreichend gekühlt wird, insbesondere dadurch dass
- die Flüssigkeitsführung (12) über die Länge ausreichend mit Flüssigkeit gefüllt ist,
- durch den Leiter (10) erwärmte Flüssigkeit aus der Flüssigkeitsführung (12) durch die Löcher weggeleitet wird und
- eine erforderliche Menge kühlender Flüssigkeit mit niedriger Temperatur durch die Flüssigkeitsführung (12) nachfließt;
und
b) die Flüssigkeit verteilt über eine Länge der Flüssigkeitsführung (12) durch die Perforation in eine Umgebung der Leiterschleife (10, 11) im Reservoir (6) abgegeben wird, so dass
- die elektrische Leitfähigkeit des Reservoirs (6) verändert wird und
- der Druck im Reservoir (6) erhöht wird.

9. Verfahren zur Förderung von einer kohlenwasserstoffhaltigen Substanz, insbesondere Bitumen oder Schwerstöl, aus einem Reservoir (6), wobei das Reservoir (6) mit Wärmeenergie zur Verringerung der Viskosität der Substanz beaufschlagt wird, wozu wenigstens eine Leiterschleife (10, 11) zur induktiven Bestromung des Reservoirs (6) als elektrische/elektromagnetische Heizung vorgesehen ist,
**dadurch gekennzeichnet,**
**dass** ein Leiter (10) der Leiterschleife (10, 11) in zumindest einem Abschnitt von einer Flüssigkeitsführung (12) zur Kühlung des Leiters (10) umgeben ist, durch die eine Flüssigkeit geleitet wird, die Flüssigkeitsführung (12) perforiert ist und die Flüssigkeit durch eine Perforation (21) der perforierten Flüssigkeitsführung (12) hindurchgeleitet wird,
wobei die Flüssigkeitsführung (12) insbesondere nach einem der Ansprüche 1 bis 8 ausgebildet ist.

10. Verfahren nach Anspruch 9,
**dadurch gekennzeichnet,**
**dass** der Leiter (10) durch die durch die Flüssigkeitsführung (12) geleitete Flüssigkeit gekühlt wird.

11. Verfahren nach einem der Ansprüche 9 oder 10,
**dadurch gekennzeichnet,**
**dass** die Flüssigkeit durch eine Perforation (21) in die Flüssigkeitsführung (12) in das Reservoir (6) eingeleitet wird.

12. Verfahren nach Anspruch 11,
**dadurch gekennzeichnet,**
**dass** die Flüssigkeit unter Druck in die Flüssigkeitsführung (12) geleitet wird, so dass innerhalb der Flüssigkeitsführung (12) im Bereich der Perforation (21) ein Druck größer als ein hydrostatischer Druck im Reservoir (6) in der Umgebung der Perforation (21) vorliegt.

13. Verfahren nach Anspruch 12,
**dadurch gekennzeichnet,**
**dass** der Druck der Flüssigkeit derart an eine vorgegebene Perforation (21) angepasst wird, dass bei Zuführung einer Flüssigkeit unter diesem Druck
a) der Leiter (10) über die gesamte Länge des von der Flüssigkeitsführung (12) umgebenen Abschnitts der Leiterschleife (10, 11) ausreichend gekühlt wird, insbesondere dadurch dass
- die Flüssigkeitsführung (12) über die Länge ausreichend mit Flüssigkeit gefüllt ist, und/oder
- durch den Leiter (10) erwärmte Flüssigkeit aus der Flüssigkeitsführung (12) durch die Löcher weggeführt wird, und/oder
- eine erforderliche Menge kühlender Flüssigkeit mit niedriger Temperatur durch die Flüssigkeitsführung (12) nachfließt;
und/oder
b) die Flüssigkeit verteilt über eine Länge der Flüssigkeitsführung (12) in eine Umgebung der Leiterschleife (10, 11) im Reservoir (6) abgegeben wird, so dass
- die elektrische Leitfähigkeit des Reservoirs (6) verändert wird; und/oder
- der Druck im Reservoir (6) erhöht wird.

14. Verfahren nach einem der Ansprüche 9 bis 13,
**dadurch gekennzeichnet,**
**dass** als Flüssigkeit Wasser oder eine organische oder anorganische Lösung zugeführt wird, die mindestens eines der folgenden Bestandteile aufweist:
- Salze;
- schwache Säuren;
- schwache Basen;
- Lösungsmittel, die insbesondere Alkane, beispielsweise Methan, Propan, Butan enthalten; und/oder
- CO₂.

15. Verfahren nach einem der Ansprüche 9 bis 14,
**dadurch gekennzeichnet,**
**dass** ein Ventil eines Förderrohrs zum Wegführen der verflüssigten kohlenwasserstoffhaltigen Substanz aus dem Reservoir (6) geschlossen wird und zu einem späteren Zeitpunkt, abhängig vom Erreichen einer vorgegebenen Zeitspanne oder vom Erreichen eines vorgegebenen Drucks innerhalb des Reservoirs (6) geöffnet wird.

16. Verfahren zum Verlegen einer Leiterschleife (10, 11), vorgesehen zur Förderung von einer kohlenwasserstoffhaltigen Substanz, insbesondere Bitumen oder Schwerstöl, aus einem Reservoir (6), wobei das Reservoir (6) mit Wärmeenergie zur Verringerung der Viskosität der Substanz beaufschlagbar ist, wozu wenigstens eine Leiterschleife (10, 11) zur induktiven Bestromung des Reservoirs (6) als elektrische/elektromagnetische Heizung vorgesehen ist,
**dadurch gekennzeichnet,**
**dass** ein Leiter (10) der Leiterschleife (10, 11) in zumindest einem Abschnitt von einer Flüssigkeitsführung (12) zur Kühlung des Leiters (10) umgeben ist, die Flüssigkeitsführung (12) perforiert ist, so dass bei Zuführung einer Flüssigkeit die Flüssigkeit über eine Perforation (21) aus der Flüssigkeitsführung (12) in das Reservoir (6) eindringt, und die Leiterschleife (10, 11) und die Flüssigkeitsführung (12) eine miteinander verbundene Einheit bilden, die gemeinsam in eine Bohrung verlegt werden.

## Claims

1. Apparatus for extracting a substance containing hydrocarbons, in particular bitumen or extra-heavy oil, from a reservoir (6), wherein the reservoir (6) can be subjected to thermal energy in order to reduce the viscosity of said substance, for which purpose at least one conductor loop (10, 11) for inductively applying current to the reservoir (6) is provided as an electric/electromagnetic heater,
**characterised in that**
a conductor (10) of the conductor loop (10, 11) is surrounded in at least one section by a liquid-carrying conduit (12) in order to cool the conductor (10), and that
the liquid-carrying conduit (12) is perforated such that when a liquid is supplied said liquid penetrates into the reservoir (6) from the liquid-carrying conduit (12) via a perforation (21).

2. Apparatus according to claim 1,
**characterised in that**
the liquid-carrying conduit (12) is designed as a tube and/or pipe, wherein the conductor (10) is arranged within the tube or the pipe, in particular such that a liquid flows around the conductor (10) when said liquid is supplied.

3. Apparatus according to claim 2,
**characterised in that**
the tube and/or the pipe is arranged approximately coaxially relative to the conductor (10), wherein in particular at least one ridge (16) is provided within the tube or the pipe for the purpose of holding the conductor (10).

4. Apparatus according to claim 2,
**characterised in that**
the conductor (10) is so arranged within the tube or the pipe that it can move freely.

5. Apparatus according to claim 1,
**characterised in that**
the liquid-carrying conduit (12) is embodied as a multiplicity of tubes and/or pipes, wherein the conductor (10) is surrounded by the multiplicity of tubes and/or pipes, wherein the multiplicity of tubes and/or pipes and the conductor (10) are preferably arranged within a shared tubular outer sleeve (20).

6. Apparatus according to one of the preceding claims, **characterised in that**
a pressurisation means (2) is provided for increasing the pressure of a liquid and for circulating said liquid, in particular a pump, such that movement of the liquid is achieved and a liquid is introduced into the liquid-carrying conduit (12) at higher pressure by virtue of the pressurisation means (2).

7. Apparatus according to one of the preceding claims, **characterised in that**
the perforation (21) is embodied and/or means are provided such that any ingress of solids and/or sand from the reservoir (6) into the liquid-carrying conduit (12) is largely prevented.

8. Apparatus according to one of the preceding claims, **characterised in that**
the perforation (21) comprises holes which are so embodied in terms of shape and/or size and/or distribution that when a liquid is supplied at a predefined pressure
a) the conductor (10) is sufficiently cooled over the entire length of that section of the conductor loop (10, 11) which is surrounded by the liquid-carrying conduit (12), in particular because
- the liquid-carrying conduit (12) is sufficiently filled with liquid over its length,
- liquid that has been heated by the conductor (10) is conveyed out of the liquid-carrying conduit (12) through the holes, and
- a required quantity of low-temperature cooling liquid subsequently flows through the liquid-carrying conduit (12);
and
b) the liquid is discharged in a distributed manner along a length of the liquid-carrying conduit (12) through the perforation into an environment of the conductor loop (10, 11) in the reservoir (6), such that
- the electrical conductivity of the reservoir (6) is changed, and
- the pressure in the reservoir (6) is increased.

9. Method for extracting a substance containing hydrocarbons, in particular bitumen or extra-heavy oil, from a reservoir (6), wherein said reservoir (6) is subjected to thermal energy in order to reduce the viscosity of the substance, for which purpose at least one conductor loop (10, 11) for inductively applying current to the reservoir (6) is provided as an electric/electromagnetic heater,
**characterised in that**
a conductor (10) of the conductor loop (10, 11) is surrounded in at least one section by a liquid-carrying conduit (12) in order to cool the conductor (10), through which a liquid is carried, the liquid-carrying conduit (12) is perforated and the liquid is conveyed through a perforation (21) of the perforated liquid-carrying conduit (12),
wherein the liquid-carrying conduit (12) is designed according to one of claims 1 to 8 in particular.

10. Method according to claim 9,
**characterised in that**
the conductor (10) is cooled by the liquid that is carried through the liquid-carrying conduit (12).

11. Method according to one of claims 9 or 10, **characterised in that**
the liquid is introduced into the reservoir (6) via a perforation (21) in the liquid-carrying conduit (12).

12. Method according to claim 11,
**characterised in that**
the liquid is carried under pressure in the liquid-carrying conduit (12), such that a pressure which is present in the region of the perforation (21) within the liquid-carrying conduit (12) is greater than a hydrostatic pressure that is present in the environment of the perforation (21) in the reservoir (6).

13. Method according to claim 12,
**characterised in that**
the pressure of the liquid is adapted to a predefined perforation (21), such that when a liquid is supplied at this pressure
a) the conductor (10) is sufficiently cooled over the entire length of that section of the conductor loop (10, 11) which is surrounded by the liquid-carrying conduit (12), in particular because
- the liquid-carrying conduit (12) is sufficiently filled with liquid over its length, and/or
- liquid that has been heated by the conductor (10) is conveyed out of the liquid-carrying conduit (12) through the holes, and/or
- a required quantity of low-temperature cooling liquid subsequently flows through the liquid-carrying conduit (12);
and/or
b) the liquid is discharged in a distributed manner along a length of the liquid-carrying conduit (12) into an environment of the conductor loop (10, 11) in the reservoir (6), such that
- the electrical conductivity of the reservoir (6) is changed, and/or
- the pressure in the reservoir (6) is increased.

14. Method according to one of claims 9 to 13, **characterised in that**
water or an organic or inorganic solution is supplied as a liquid, comprising at least one of the following components:
- salts;
- weak acids;
- weak bases;
- solvents containing in particular alkanes such as e.g. methane, propane, butane; and/or
- CO₂.

15. Method according to one of claims 9 to 14, **characterised in that**
a valve is closed in an extraction pipe for removing the liquefied substance containing hydrocarbons from the reservoir (6), and subsequently opened as a function of a predefined time period being completed or a predefined pressure within the reservoir (6) being reached.

16. Method for installing a conductor loop (10, 11) which is provided for the purpose of extracting a substance containing hydrocarbons, in particular bitumen or extra-heavy oil, from a reservoir (6), wherein said reservoir (6) can be subjected to thermal energy in order to reduce the viscosity of said substance, for which purpose at least one conductor loop (10, 11) for inductively applying current to the reservoir (6) is provided as an electric/electromagnetic heater,
**characterised in that**
a conductor (10) of the conductor loop (10, 11) is surrounded in at least one section by a liquid-carrying conduit (12) in order to cool the conductor (10), the liquid-carrying conduit (12) is perforated such that when a liquid is supplied said liquid penetrates into the reservoir (6) from the liquid-carrying conduit (12) via a perforation (21), and the conductor loop (10, 11) and the liquid-carrying conduit (12) form an integral unit and are installed jointly in a borehole.

## Revendications

1. Installation pour faire sortir une substance hydrocarbonée, notamment du bitume ou de l'huile très lourde, d'un réservoir (6), le réservoir (6) pouvant être alimenté en énergie calorifique pour diminuer la viscosité de la substance, au moins une boucle (10, 11) conductrice, pour l'alimentation en courant par induction du réservoir (6), étant prévue à cet effet comme dispositif de chauffage électrique/électromagnétique,
**caractérisée**
**en ce qu'**un conducteur (10) de la boucle (10, 11) conductrice est, pour le refroidissement du conducteur (10), entouré, dans au moins un tronçon, d'une conduite (12) de liquide, et en ce que la conduite (12) de liquide est perforée, de manière à ce qu'à l'entrée d'un liquide, le liquide pénètre de la conduite (12) de liquide dans le réservoir (6) par une perforation (21).

2. Installation suivant la revendication 1,
**caractérisée**
**en ce que** la conduite (12) de liquide est constituée sous la forme d'un conduit souple et/ou d'un tuyau, le conducteur (10) étant disposé à l'intérieur du conduit souple ou du tuyau, notamment de manière à ce qu'à l'entrée d'un liquide, le conducteur (10) soit entouré du liquide.

3. Installation suivant la revendication 2,
**caractérisée**
**en ce que** le conduit souple et/ou le tuyau sont disposés à peu près coaxialement au conducteur (10), notamment au moins une entretoise (16) étant, pour immobiliser le conducteur (10), prévue à l'intérieur du conduit souple ou du tuyau.

4. Installation suivant la revendication 2,
**caractérisée**
**en ce que** le conducteur (10) est disposé de manière mobile librement à l'intérieur du conduit souple ou du tuyau.

5. Installation suivant la revendication 1,
**caractérisée**
**en ce que** la conduite (12) de liquide est constituée sous la forme d'une pluralité de conduits souples et/ou de tuyaux, le conducteur (10) étant entouré de la pluralité de conduits souples et/ou de tuyaux, de préférence la pluralité de conduits souples et/ou de tuyaux et le conducteur (10) étant disposés à l'intérieur d'une gaine (20) extérieure commune en forme de conduit souple.

6. Installation suivant l'une des revendications précédentes, **caractérisée**
**en ce qu'**il est prévu un moyen (2) d'élévation de la pression,, pour élever la pression d'un liquide et pour faire circuler le liquide, notamment une pompe, de manière à obtenir, à l'aide du moyen (2) d'élévation de la pression, un déplacement du liquide et à introduire un liquide sous une pression plus élevée dans la conduite (12) de liquide.

7. Installation suivant l'une des revendications précédentes, **caractérisée**
**en ce que** la perforation (21) est constituée et/ou en ce qu'il est prévu des moyens, de manière à empêcher sensiblement une pénétration de corps solides et/ou de sable du réservoir (6) dans la conduite (12) de liquide.

8. Installation suivant l'une des revendications précédentes, **caractérisée**
**en ce que** la perforation (21) a des trous, qui sont conformés en forme et/ou en dimension et/ou en répartition, de manière à ce qu'à l'entrée d'un liquide sous une pression donnée à l'avance,
a) le conducteur soit refroidi suffisamment sur toute la longueur du tronçon, entouré par la conduite (12) de liquide, de la boucle (10, 11) conductrice, notamment par le fait que la conduite (12) de liquide est remplie sur la longueur de suffisamment de liquide, du liquide réchauffé par le conducteur (10), sort par les trous de la conduite (12) de liquide et une quantité nécessaire de liquide de refroidissement s'écoule en ayant une température basse dans la conduite (12) de liquide et
b) le liquide est cédé, de manière répartie, sur un tronçon de la conduite (12) de liquide, par la perforation, dans ce qui entoure la boucle (10, 11) conductrice dans le réservoir (6), de manière
à modifier la conductivité électrique du réservoir (6) et
à augmenter la pression dans le réservoir (6).

9. Procédé pour faire sortir une substance hydrocarbonée, notamment du bitume ou de l'huile très lourde, d'un réservoir (6) en alimentant le réservoir (6) en énergie calorifique, pour diminuer la viscosité de la substance, au moins une boucle (10, 11) conductrice d'alimentation en courant par induction du réservoir (6) étant à cet effet prévue comme dispositif de chauffage électrique/électromagnétique,
**caractérisé**
**en ce qu'**un conducteur (10) de la boucle (10, 11) conductrice est, pour le refroidissement du conducteur (10), entouré, dans au moins un tronçon, d'une conduite (12) de liquide, dans laquelle on fait passer un liquide, la conduite (12) de liquide est perforée et on fait passer le liquide par une perforation (21) de la conduite (12) de liquide perforée,
dans lequel la conduite (12) de liquide est constituée notamment suivant l'une des revendications 1 à 8.

10. Procédé suivant la revendication 9,
**caractérisé**
**en ce que** l'on refroidit le conducteur (10) par le liquide passant dans la conduite (12) de liquide.

11. Procédé suivant l'une des revendications 9 ou 10, **caractérisé**
**en ce que** l'on introduit le liquide dans le réservoir (6) par une perforation (21) de la conduite (12) de liquide.

12. Procédé suivant la revendication 11,
**caractérisé**
**en ce que** l'on fait passer le liquide sous pression dans la conduite (12) de liquide, de manière à avoir, à l'intérieur de la conduite (12) de liquide, dans la région de la perforation (21), une pression plus grande, qu'une pression hydrostatique dans le réservoir (6), alentour de la perforation (21).

13. Procédé suivant la revendication 12,
**caractérisé**
**en ce que** l'on adapte la pression de liquide à une perforation (21) donnée à l'avance, de manière à ce qu'à l'entrée d'un liquide sous cette pression,
a) le conducteur soit refroidi suffisamment sur toute la longueur du tronçon, entouré par la conduite (12) de liquide, de la boucle (10, 11) conductrice, notamment par le fait que
la conduite (12) de liquide est remplie sur la longueur de suffisamment de liquide,
du liquide réchauffé par le conducteur (10) sort par les trous de la conduite (12) de liquide et
une quantité nécessaire de liquide de refroidissement s'écoule en ayant une température basse dans la conduite (12) de liquide;
b) le liquide est cédé, de manière répartie, sur un tronçon de la conduite (12) de liquide, par la perforation, dans ce qui entoure la boucle (10, 11) conductrice dans le réservoir (6), de manière
à modifier la conductivité électrique du réservoir (6) et
à augmenter la pression dans le réservoir (6).

14. Procédé suivant l'une des revendications 9 à 13, **caractérisé**
**en ce que** l'on envoie comme liquide de l'eau ou une solution organique ou minérale, qui a au moins l'un des constituants suivantes :
- sels;
- acides faibles;
- bases faibles;
- solvants, qui contiennent notamment des alcanes, par exemple du méthane, du propane, du butane et/ou
- CO₂.

15. Procédé suivant l'une des revendications 9 à 14, **caractérisé**
**en ce que** l'on ferme une vanne d'un tuyau d'évacuation de la substance hydrocarbonée liquéfiée du réservoir (6), et on l'ouvre à un instant ultérieur, en fonction du point de savoir s'il s'est écoulé un laps de temps donné à l'avance ou si une pression donnée à l'avance a été atteinte à l'intérieur du réservoir (6).

16. Procédé de pose, d'une boucle (10, 11) conductrice prévue pour faire sortir une substance hydrocarbonée, notamment du bitume ou de l'huile très lourde, d'un réservoir (6), le réservoir (6) pouvant être alimenté en énergie calorifique pour diminuer la viscosité de la substance, au moins une boucle (10, 11) conductrice d'alimentation en courant par induction du réservoir (6) étant à cet effet prévue comme dispositif de chauffage électrique/électromagnétique,
**caractérisé**
**en ce qu'**un conducteur (10) de la boucle (10, 11) conductrice est, pour le refroidissement du conducteur (10), entouré dans au moins un tronçon d'une conduite (12) de liquide et en ce que la conduite (12) de liquide est perforée, de manière à ce qu'à l'entrée d'un liquide, le liquide pénètre de la conduite (12) de liquide dans le réservoir (6) par une perforation (21), et la boucle (10, 11) conductrice et la conduite (12) de liquide forment une unité, en étant reliées l'une à l'autre, et sont posées ensemble dans un forage.
